(19) Europäisches Patentamt
European Patent Office
Office européen des brevets

(11) EP 1 764 796 A2

(12) **EUROPEAN PATENT APPLICATION**

(43) Date of publication:
**21.03.2007 Bulletin 2007/12**

(51) Int Cl.:
***G11B 7/24*** *(2006.01)*

(21) Application number: **06254647.8**

(22) Date of filing: **06.09.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **07.09.2005 JP 2005259428**

(71) Applicant: **FUJIFILM Corporation**
**Minato-ku**
**Tokyo (JP)**

(72) Inventor: **Nagate, Hiroshi**
**Fujinomiya-shi**
**Shizuoka (JP)**

(74) Representative: **Stevens, Jason Paul**
**Frank B. Dehn & Co.**
**St Bride's House**
**10 Salisbury Square**
**London EC4Y 8JD (GB)**

(54) **Optical recording medium and production method thereof**

(57) An object of the invention is to provide an optical recording medium in which even if a filter layer or the like is laminated on a first gap layer, the first gap layer is not softened, and harmful effect such as a wrinkle and crack is not caused in the laminated filter layer or the like, wherein the uniformity of the thickness of first gap layer is stable; and an efficient production method thereof. Therefore, the invention includes an optical recording medium which includes a recording layer (4), a first substrate (5), a second substrate (1) a first gap layer (8), a second gap layer (7) and a filter layer (6) wherein the recording layer records information by holography and the first gap layer includes a non-thermosoftening material having a deflection temperature under load of at least 70°C or more; and a production method thereof.

FIG. 4

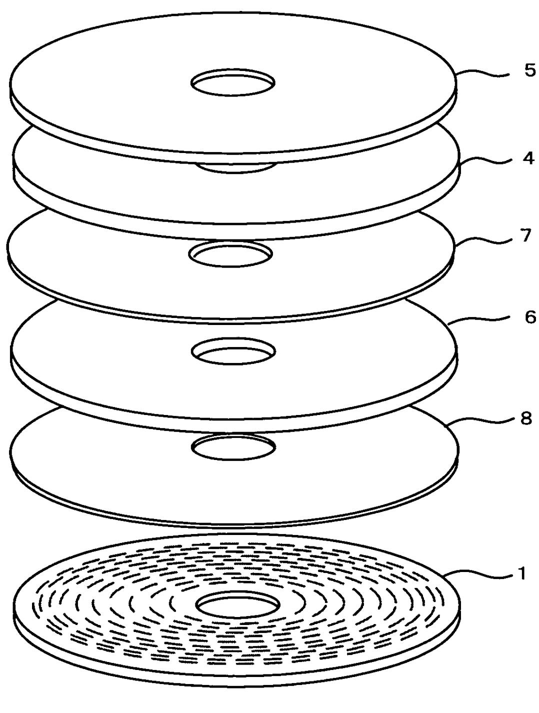


EP 1 764 796 A2

## Description

BACKGROUND OF THE INVENTION

Field of the Invention

The present invention relates to an optical recording medium, in which information is recorded by holography, and production method thereof, and relates to a recording method and reproducing method of optical recording medium.

Description of the Related Art

An optical recording medium is one of the recording media into which large information can be written. Among the optical recording media, for example, rewritable optical recording media such as a magnetic optical disc and phase change optical disc, and write-once optical recording media such as CD-R have been put into practice; however, further large-capacity optical recording media have been demanded.

Conventional optical recording media record information two-dimensionally. Thus, there is a limitation in increasing the recording capacity. Therefore, in recent years, attention has been made in a holographic optical recording method in which information can be recorded three-dimensionally.

In the holographic optical recording method, generally, information light with a two-dimensional intensity distribution and reference light with an intensity level equal to that of the information light are superimposed inside a photosensitive recording layer to form an interference image, and an optical characteristic distribution is created by means of the interference image, whereby information is recorded in the recording layer. Meanwhile, reading (reproducing) of the written information is performed by applying only reference light (reproduction light) onto the recording layer from the same direction and thereby allowing a diffracted ray that has an intensity distribution corresponding to the optical characteristic distribution formed in the recording layer to be emitted from the recording layer.

In this holographic optical recording method, optical characteristic distribution is formed three-dimensionally in the recording layer, and thus it is possible to partially superimpose a region into which information has been written by one information light and a region into which information has been written by another information light, namely, enabling multiplexing recording, which matches to a demand for large-capacity optical recording media. When digital volume holography is utilized in such multiplexing recording, the signal to noise ratio (S/N ratio) at one spot becomes extremely high. Thus, the resulting hologram type optical recording medium can reproduce the original information correctly even if the S/N ratio is lowered in some degree due to overwriting. As a result, the number of multiplexing recording reaches as many as several hundred times, enabling a remarkable increase of the recording capacity of optical recording medium (see, Japanese Patent Application Laid-Open (JP-A) No. 2002-123949).

As a such hologram type optical recording medium, for example, an optical recording medium 20 is proposed that comprises a second substrate 1 provided with a servo pit pattern 3 on the surface thereof, a reflective film 2 made of e.g. aluminum on the surface of the servo pit pattern, a recording layer 4 on the reflective film, and a first substrate 5 on the recording layer, as shown in FIG. 1 (JP-A No. 11-311936).

Further, JP-A No. 2004-265472 discloses an improved optical recording medium 20a shown in FIG. 2 in which a first gap layer 8 for smoothing the surface of the second substrate 1 and adjusting the size of holograms formed in the recording layer, a filter layer 6 for selectively reflecting only the lights with wavelength of the information light or reference light, and a quarter wave plate 9 are formed between a second substrate 1 and a recording layer 4.

However, in the case of such optical recording medium, there is a problem as follows. The first gap layer 8 is formed by bonding a polycarbonate film (PC film) by use of an adhesive material and thus, the heat during which the filter layer 6 or the like is laminated on the first gap layer 8 makes the adhesive material softened, causing wrinkles in the PC film in some cases, which causes wrinkles and/or cracks in the filter layer 6 laminated on the first gap layer 8.

In addition, there is another problem that the above-mentioned softening impairs the uniformity of the thickness of the laminated first gap layer 8, making it impossible for the first gap layer 8 to perform to smooth the surface of the second substrate 1 and to adjust the size of holograms formed in the recording layer.

Therefore, an optical recording medium in which even if a filter layer or the like is laminated on the first gap layer, the first gap layer is not softened due to the affection of e.g. heat, and harmful effect such as a wrinkle and crack is not caused in the laminated filter layer or the like, wherein the uniformity of the thickness of first gap layer is stable, and the first gap layer can smooth the surface of the second substrate 1 and suitably adjust the size of holograms formed in the recording layer; and a method for producing an optical recording medium that can produce such optical recording medium efficiently, are desired.

## SUMMARY OF THE INVENTION

An object of the invention is to solve conventional problems mentioned above and to achieve the following objects. Specifically, an object of the invention is to provide an optical recording medium in which even if a filter layer or the like is laminated on a first gap layer, the first gap layer is not softened, and harmful effect such as a wrinkle and crack is not caused in the laminated filter layer or the like, wherein the uniformity of the thickness of first gap layer is stable; and a method for producing an optical recording medium that can produce such optical recording medium efficiently.

Means for solving the above-mentioned problems are as follows. Specifically, the optical recording medium of the invention includes a recording layer, a first substrate, a second substrate, a first gap layer, second gap layer, and a filter layer, wherein the recording layer records information by holography and the first gap layer includes a non-thermosoftening material having a deflection temperature under load of at least 70°C or more.

The optical recording medium of the invention includes the recording layer for recording information by holography, first substrate, second substrate, first gap layer, second gap layer, and filter layer, and the first gap layer includes a non-thermosoftening material having a deflection temperature under load of at least 70°C or more. Thus, even if a filter layer or the like is laminated on the first gap layer, the first gap layer is not softened due to the heat during the lamination, and harmful effect such as a wrinkle and crack is not caused in the laminated filter layer or the like, thus not causing adverse effect in the filter layer.

The optical recording method of the invention includes applying information light and reference light onto the optical recording medium of the invention in such a way that the optical axis of the information light is collinear with that of the reference light.

The method for producing an optical recording medium of the invention includes at least forming a recording layer and forming a first gap layer.

The method for reproducing optical information of the invention includes applying reproduction light, the same as the reference light, onto an interference image to reproduce recorded information corresponding to the interference image, wherein the interference image is formed in a recording layer by means of the optical recording method of the invention.

## BRIEF DESCRIPTION OF THE DRAWINGS

FIG. 1 is a schematic cross-sectional view showing the structure of a conventional optical recording medium.
FIG. 2 is a schematic cross-sectional view showing the structure of a conventional optical recording medium.
FIG. 3 is a partial cross-sectional view of an example of the optical recording medium of the invention.
FIG. 4 is a partial cross-sectional view showing an example of the layer structure of the optical recording medium of the invention.
FIG. 5 is a schematic cross-sectional view showing an example of the optical recording medium according to the specific example 1 of the invention.
FIG. 6 is a schematic cross-sectional view showing an example of the optical recording medium according to the specific example 2 of the invention.
FIG. 7 is a graph showing reflection characteristics of a filter, which is a laminate of three cholesteric liquid crystal layers, for incident light from the vertical direction (0°).
FIG. 8 is an explanatory diagram showing an example of the optical system around the optical recording medium according to the invention.
FIG. 9 is a block diagram showing an example of the entire configuration of the optical recording and reproducing apparatus according to the invention.

## DESCRIPTION OF THE PREFERRED EMBODIMENTS

### (Optical recording medium)

The optical recording medium of the invention comprises a first substrate, recording layer, second gap layer, filter layer, first gap layer, second substrate, and may further comprise additional layers on an as-needed basis. The optical recording medium of the invention is characterized by that the first gap layer comprises a non-thermosoftening material having a deflection temperature under load of at least 70°C or more. In addition, the optical recording medium of the invention is used for an optical recording method (collinear technology) in which the information light and reference light are applied in such a way that the optical axis of the information light is collinear with that of the reference light.

<First gap layer>

The first gap layer is formed to smooth the surface of the servo substrate and is effective for adjusting the size of holograms formed in the recording layer based on the mechanism that the focus of a servo signal light is shifted from the focus of a holographic signal light, thereby increasing the S/N ratio of the holographic signal light.

The material for the first gap layer is preferably a stable material in respect of heat resistance such that even if a filter layer or the like is laminated on the first gap layer, the first gap layer is not softened due to the heat during lamination and wrinkles and/ or cracks are not caused in the filter layer, and it is necessary for the material for the first gap layer to include at least a non-thermosoftening material.

-Non-thermosoftening material-

The non-thermosoftening material is not particularly limited and can be appropriately selected depending on the intended purpose as long as the deflection temperature under load in accordance with JIS K7207 is at least 70°C or more under the condition of 4.6 $kgf/cm^2$. For example, the non-thermosoftening material may be inorganic material or may be organic material.

When the non-thermosoftening material is inorganic material, softening due to the heat during lamination is hard to occur, but the non-thermosoftening material has at least a heat resistance of 70°C or more as measured under the condition of 4.6 $kgf/cm^2$ according to JIS K7207.

The deflection temperature under load can be measured under the condition according to JIS K7207, for example, as follows. Specifically, a test piece is prepared by using a film material with a size of 127 mmx12.7 mm, thickness of 0.1 mm having a sufficiently low deflection temperature under load and forming a film made of inorganic material thereon by e.g. vapor deposition. Then, measurement is carried out under the condition of 4.6 $kgf/cm^2$ at a rate of temperature rise of 2°C/min.

The organic material can be appropriately selected depending on the intended purpose; examples thereof include acetate resins such as triacetylcellulose, polyester resins, polyethersulfone resins, polysulfone resins, polycarbonate resins, polyamide resins, polyimide resins, polyolefin resins, acrylic resins, polynorbomene resins, cellulose resins, polyarylate resins, polystyrene resins, polyvinylalcohol resins, polyvinyl chloride resins, polyvinylidene chloride resins, and polyacrylic resins. Among these, polycarbonate resins and acrylic resins are preferable. These may be used singly or in combination.

The inorganic material can be appropriately selected depending on the intended purpose; examples thereof include $SiO_2$, $TiO_2$ $Al_2O_3$, NiO, SiO, TiO, ZnO, ZnS, $MgF_2$, $Ti_2O_5$, $Nb_2O_5$, and $BaTiO_3$. Among these, $SiO_2$, $TiO_2$, and $Al_2O_3$ are preferable in terms of refractive index, transparency, and versatility. These may be used singly or in combination.

-Method for forming first gap layer-

The method for forming the first gap layer is not particularly limited and can be appropriately selected depending on the intended purpose. The first gap layer can be formed on a servo substrate by, for example, a spin coating method, method for bonding a sheet member made of e.g. resin by use of a non-thermosoftening adhesive, vapor deposition, sputtering, bar coater, slit coater, and plasma CVD. Among these, the spin coating method, method for bonding a sheet member, vapor deposition and sputtering are preferable in that the first gap layer can be formed uniformly and film thickness can be controlled easily.

-Spin coating-

The spin coating is a method in which a coating solution containing materials dissolved into a solvent is dropped on the substrate rotating at high speed, the coating solution is applied uniformly on the surface of the substrate utilizing centrifugal force due to the rotation, and then heat treated, removing the solvent through volatilization and causing raw materials to undergo a chemical reaction to thereby form a layer.

The coater for use in the spin coating is not particularly limited and can be appropriately selected depending on the intended purpose; examples thereof include spin coaters, slit coaters, and bar coaters.

Among organic materials of the non-thermosoftening material, preferred materials are resins such as triacetylcellulose (TAC), polycarbonate (PC), polyethylene terephthalate (PET), polystyrene (PS), polysulfone (PSF), polyvinylalcohol (PVA) and methyl polymethacrylate (PMMA) in terms of transparency.

Examples of the coating solution for the spin coating include those in which a UV-curable material is added to the polycarbonate (PC) or methyl polymethacrylate (PMMA).

In the case of polycarbonate (PC), those prepared by dissolving and dispersing with use of methyl ethyl ketone as a solvent can be used.

Prepared coating solutions containing a monomer, oligomer, photoinitiator and other additives can be used as the coating solution in which a UV-curable material is added to the polycarbonate (PC).

Examples of the monomer include Aronix M-309, M-310, produced by Toagosei Co. Ltd.

Examples of the oligomer include urethane acrylate and polyester acrylate.

Examples of the photoinitiator include IRGACURE series, produced by Ciba Specialty Chemicals.

The region on which the coating solution is applied is the entire surface of the servo substrate on the side where a servo pit pattern, etc. is formed. When a reflective film or the like is formed on the surface, the coating solution is applied on the entire surface of the reflective film.

After the application, the applied coating solution may be cured by drying at 60°C to 100°C for 10 minutes to 60 minutes or may be cured by the exposure to UV radiation having a wavelength 100 nm to 400 nm to allow a chemical reaction using the UV energy.

-Bonding of sheet member-

The sheet member is a film sheet and is bonded to the surface of the servo substrate on the side where a servo pit pattern, etc. is formed using a non-thermosoftening adhesive or the like. As a result, the first gap layer can be formed. When a reflective film or the like is formed on the surface, the sheet member is bonded to the surface of the reflective film.

The material for the sheet member can be appropriately selected depending on the intended purpose; examples thereof include transparent resin films such as triacetylcellulose (TAC), polycarbonate (PC), polyethylene terephthalate (PET), polystyrene (PS), polysulfone (PSF), polyvinylalcohol (PVA) and methyl polymethacrylate (PMMA); norbornene resin films such as ARTON (bland name, produced by JSR Corp.), ZEONOA (bland name, produced by Nippon Zeon).

Among these, those with high isotropy are preferable, and TAC, PC, ARTON and ZEONOA are most preferable.

The thickness of the sheet member is not particularly limited and can be appropriately set depending on the intended purpose; the thickness is preferably 5 μm to 200 μm, more preferably 10 μm to 100 μm.

The non-thermosoftening adhesive is not particularly limited and can be appropriately selected depending on the intended purpose; examples thereof include UV adhesives, acryl adhesives, epoxy adhesives, and rubber adhesives. Among these, UV adhesives are preferable in terms of transparency and in that curing is performed conveniently.

The adhesive condition is preferably at a temperature of 20°C to 30°C and a humidity of 20% to 80%.

The sheet member can be bonded by washing the surface of the servo substrate, drying, and pressure bonding the sheet member using the non-thermosoftening adhesive by means of e.g. a laminator (model name: HAL110aa, produced by Sankyo Co., Ltd.) or vacuum bonding equipment (produced by Shibaura Mechatronics Corporation). The conditions of pressure bonding with a laminator are preferably a pressure-roller temperature of 20°C to 30°C, pressure-roller pressure of 0.1 MPa to 1.0 MPa and bonding speed of 0.1 m/min to 5.0 m/min.

-Vapor deposition-

The vapor deposition can be performed by any method without limitation and the method can be appropriately selected depending on the intended purpose; examples thereof include vacuum vapor deposition, molecular-beam deposition (MEB), ion plating, ion beam deposition, and electron beam vapor deposition. In the vacuum vapor deposition, an evaporation source and a substrate receiving deposition are placed in a vacuum vessel and a film is formed generally under the pressure of about $10^{-2}$ Pa to $10^{-4}$ Pa.

In the molecular-beam deposition (MEB), almost collimated molecular-beam is used, and Knudsen cell (K cell) with an orifice at an exhaust nozzle of resistively heated crucible is used as an evaporation source. Typically, a film is formed atom-by-atom under very high vacuum conditions of $10^{-7}$ Pa to $10^{-9}$ Pa. The ion plating includes a variety of methods. For example, in a matrix method, a negative voltage of several kV is applied to a substrate receiving deposition and a film is formed under a pressure of several Pa. Introduced ions collide with the substrate receiving deposition at high speed and are attached with the energy. Thus, a film with strong adherence can be obtained. The ion beam deposition is a method in which an ion beam of a substance for thin film is made in an ion source, and the ion beam is accelerated to form a thin film. The ion beam deposition is one type of the ion plating. Cluster ion beam deposition is a typical method, by which a film with a satisfactory crystalline quality can be obtained.

The evaporation source is not particularly limited and can be appropriately selected depending on the intended purpose. For example, among the inorganic materials, $SiO_2$, $TiO_2$, and $Al_2O_3$ are preferable in terms of refractive index, transparency, and versatility. These may be used singly or in combination.

The deposition region is the entire surface of the servo substrate on the side where a servo pit pattern, etc. is formed. When a reflective film or the like is formed on the surface, the deposition region is the entire surface of the reflective film.

-Sputtering-

The sputtering is a method in which a direct current high voltage is applied between a substrate receiving deposition and a target (substance to be deposited) while introducing an inert gas such as an Ar gas in a vacuum of $1.3 \times 10^{-2}$ Pa to 1.3 Pa, Ar or the like ionized by glow discharge is allowed to collide with the target as a cathode, and sputtered target substance is deposited on the substrate receiving deposition as an anode to form a film. In addition, reactive sputtering (e.g. ITO, TiN) can be performed by introducing a trace amount of reactive gas such as $O_2$ and $N_2$ gas together with the above-mentioned Ar gas.

The target is not particularly limited and can be appropriately selected depending on the intended purpose. For example, among the inorganic materials, $SiO_2$, $TiO_2$, and $Al_2O_3$ are preferable in terms of refractive index, transparency, and versatility. These may be used singly or in combination.

The sputtering region is the entire surface of the servo substrate on the side where a servo pit pattern, etc. is formed. When a reflective film or the like is formed on the surface, the sputtering region is the entire surface of the reflective film.

-Thickness of first gap layer-

The thickness of the first gap layer after each operation of the spin coating, drying, the bonding of sheet member, the vapor deposition, and the sputtering is preferably 5 μm to 200 μm, more preferably 10 μm to 100 μm. If the thickness is less than 5 μm, the servo signal light and holographic signal light are mixed and the S/N ratio of holographic signal light is reduced, resulting in the increase of error rate in some cases. If the thickness is more than 200 μm, it may take longer time to form a first gap layer during production or the weight of the disc may become too large due to the increase of the total thickness of disc.

<Second gap layer>

The second gap layer is formed between the recording layer and the filter layer.

The second gap layer has a function to prevent the deterioration of multiplexing recording capability of optical recording medium. Specifically, there is a point in the recording layer at which both information light and reproduction light focus; if this focusing area is embedded in photopolymers, excessive exposure takes places and thus an excess amount of monomers are consumed, leading to poor multiplexing recording performance. To avoid this, a transparent, inert second gap layer is provided, by which an inert region is formed, making it possible to constrain the excessive consumption and to maintain high multiplexing recording performance.

The material for the second gap layer is not particularly limited and can be appropriately selected depending on the intended purpose; examples thereof include transparent resin films such as triacetylcellulose (TAC), polycarbonate (PC), polyethylene terephthalate (PET), polystyrene (PS), polysulfone (PSF), polyvinylalcohol (PVA) and methyl polymethacrylate (PMMA); norbornene resin films such as ARTON (bland name, produced by JSR Corp.), ZEONOA (bland name, produced by Nippon Zeon).

Among these, those with high isotropy are preferable, and TAC, PC, ARTON and ZEONOA are most preferable.

The thickness of the second gap layer is not particularly limited and can be appropriately set depending on the intended purpose. Preferably, the thickness of the second gap layer is 1 μm to 200 μm, more preferably, 30 μm to 100 μm.

The second gap layer with a thickness of less than 1 μm may invite reduced sensitivity or reduced multiplicity because too much amount of monomers in the holographic recording layer are consumed during holographic recording. The second gap layer with a thickness of more than 200 μm may invite reduced sensitivity or reduced multiplicity because the region of holographic recording layer during holographic recording becomes remote from the focus.

<First substrate>

As shown in FIGS. 3 and 4, the first substrate is disposed on the surface of a recording layer 4 and protects the surface of the recording layer 4. In addition, the first substrate is a support serving as a member for mechanical strength of optical recording medium 21.

The shape, structure, size and the like of the first substrate are not particularly limited and can be appropriately set depending on the intended purpose; examples of the shape of the first substrate include a disc shape, card-like flat shape, and sheet shape; examples of the structure of the first substrate include a single-layer structure and multilayered structure; and the size of the first substrate can be appropriately set according to the size of the optical recording medium, for example.

The material for the first substrate can be appropriately selected depending on the intended purpose. For example, inorganic and organic materials can be suitably used.

Examples of the inorganic materials include glass, quartz and silicon.

Examples of the organic materials include acetate resins such as triacetylcellulose, polyester resins, polyethersulfone resins, polysulfone resins, polycarbonate resins, polyamide resins, polyimide resins, polyolefin resins, acrylic resins, polynorbornene resins, cellulose resins, polyarylate resins, polystyrene resins, polyvinylalcohol resins, polyvinyl chloride resins, polyvinylidene chloride resins, polyacrylic resins, polylactate resins, plastic film laminate paper and synthetic paper. These may be used singly or in combination. Among these, polycarbonate resins and acrylic resins are preferable in light of their formability, peeling properties, and costs.

The first substrate may be either a freshly prepared one or a commercially available one.

The thickness of the first substrate is not particularly limited and can be appropriately set depending on the intended purpose; the thickness is preferably 5 μm to 1,200 μm, more preferably 100 μm to 700 μm. If the thickness of the support is less than 5 μm, the first substrate may not serve to protect the recording layer sufficiently. If the thickness is greater than 1,200 μm, the distance from disc surface to the recording layer or to the layer where a pit is formed increases and thus the focal distances of recording light and reproduction light may be too long.

<Second substrate>

The second substrate is arranged opposite to the first substrate and is positioned as the outermost layer. Information about irradiating position of the information light and reference light, the information being used for recording information in an optical recording medium, is formed on the second substrate and besides, the second substrate has a function as a support serving as a member for mechanical strength of the optical recording medium.

The shape, structure, size and the like of the second substrate can be appropriately set depending on the intended purpose; examples of the shape of the substrate includes a disc shape and card-like shape, and shape that can ensure the mechanical strength of the resultant optical recording medium needs to be selected. Preferably, the second substrate has the same outer shape as the first substrate. In addition, when light for recording and reproduction is incident through the substrate, the substrate needs to be transparent enough to admit such light of desired wavelengths.

For the material of the second substrate, glass, ceramics, resins and the like are generally used; however, resin is most preferable in view of the formability and cost.

Examples of the resins include polycarbonate resins, acrylic resins, epoxy resins, polystyrene resins, acrylonitrile-styrene copolymers, polyethylene resins, polypropylene resins, silicone resins, fluorine resins, ABS resins and urethane resins. Among these, polycarbonate resins and acrylic resins are most preferable in view of their formability, optical characteristics, and costs.

As in the case of the first substrate, the second substrate may be either a freshly prepared one or a commercially available one.

The information about irradiating position of light formed on the second substrate is not particularly limited and can be appropriately selected depending on the intended purpose; examples thereof include tracking information, focus information, address information, and information on disc condition.

Examples of the tracking information include wobble pits, wobble grooves, and tracking pits.

Examples of the focus information include reflective films formed on the surface of the second substrate, mirrors for focus, and focus pits.

Examples of the address information include concave-convex formed on the wobble pit, encoded pit arrays, and wobble modulated signals.

Each information may be formed in a combined way. For example, multiple numbers of address-servo areas - addressing areas linearly extending in the radial direction of the substrate - are provided on the substrate at given angles to one another, and each fan-shaped area between adjacent address-servo areas serves as a data area. In the address-servo areas, information for performing a focus servo operation and a tracking servo operation by means of a sampled servo system and address information are previously recorded (or pre-formatted) in the form of emboss pits (servo pits).

There is no need to provide a servo pit pattern in a case where the optical recording medium is a card-like shape.

The thickness of the second substrate is not particularly limited and can be appropriately set depending on the intended purpose; the thickness is preferably 0.1 mm to 5 mm, more preferably 0.3 mm to 2 mm. If the thickness of the second substrate is less than 0.1 mm, the optical disc may become deformed during storage. If the thickness is greater than 5 mm, the weight of the optical disc is increased and excess load may be imposed on a drive motor.

The reflective film may be formed on the surface of the servo pit pattern of the second substrate.

For the material of the reflective film, materials that offer high reflectivity to recording light and reference light are preferable. When the wavelength of light to be adopted is 400 nm to 780 nm, Al, Al alloys, Ag, Ag alloys and the like are preferably used. When the wavelength of light to be adopted is 650 nm or more, Al, Al alloys, Ag. Ag alloys, Au, Cu alloys, TiN and the like are preferably used.

By using an optical recording medium which reflects light by a reflective film and can record or erase information

- for example, DVD (Digital Versatile (Video) Disc), directory information indicative of the locations where information has been recorded, the time when information has been recorded, and the locations where errors have occurred and how information has been re-recorded on spare areas can also be recorded on, and erased from the optical recording medium without adversely affecting holograms.

The method for forming the reflective film is not particularly limited and can be appropriately selected depending on the intended purpose; examples thereof include various types of vapor deposition, such as vacuum vapor deposition, sputtering, plasma CVD, photo CVD, ion plating, and electron beam vapor deposition. Among these, sputtering is most preferable in view of mass productivity, film quality, and the like.

The thickness of the reflective film is preferably 50 nm or more, more preferably 100 nm or more, in order to secure sufficient reflectivity.

<Recording layer>

The recording layer is a layer in which information can be recorded by holography. Materials that can undergo changes in their optical characteristics (e.g., absorption index and/or refractive index) upon irradiation with electromagnetic rays (e.g., γ-ray, X-ray, ultraviolet ray, visible light ray, infrared ray, and radio waves) with predetermined wavelength are used.

The recording layer material contains photopolymer and further contains an additional component appropriately selected on an as-needed basis.

-Photopolymer-

The photopolymer includes those to be highly-polymerized as a result of polymerization reaction upon irradiation with light and those to be decomposed upon irradiation with light. The photopolymer is not particularly limited and can be appropriately selected depending on the intended use. For example, the photopolymer contains a monomer and a photoinitiator and further contains additional components such as a sensitizer, oligomers, and/or binder on an as-needed basis.

Examples of the photopolymer include those disclosed in "Photopolymer Handbook" (published by Kogyo Chosakai Publishing Inc., 1989), "Photopolymer Technology" (published by The Nikkan Kogyo Shimbun Ltd., 1989), SPIE Journals and Proceedings Vol. 3010 on pp 354-372 (1997), and SPIE Journals and Proceedings Vol. 3291 pp 89-103 (1998). In addition, examples of the photopolymer include photopolymers disclosed in U.S. Patent Nos. 5,759,721, 4,942,112, 4,959,284, 6,221,536, and 6,743,552; International Publication Nos. WO 97/44714, WO 97/13183, WO 99/26112, and WO 97/13183; Japanese Patent (JP-B) Nos. 2880342, 2873126, 2849021, 3057082, and 3161230; and JP-A Nos. 2001-316416 and 2000-275859.

-Monomer-

The monomer is not particularly limited can be appropriately selected in depending on the intended use; examples thereof include radical polymerizable monomers having a unsaturated bond such as acrylic group and methacrylic group, and cationic polymerizable monomers having an ether structure such as epoxy ring and oxetane ring. Each of these monomers may be monofunctional or polyfunctional. Photocrosslinking monomers may also be used.

Examples of the radical polymerizable monomer include acryloylmorpholine, phenoxyethylacrylate, isobonylacrylate, 2-hydroxypropylacrylate, 2-ethylhexylacrylate, 1,6-hexanedioldiacrylate, tripopyleneglycol diacrylate, neopentylglycol PO-modified diacrylate, 1,9-nonanedioldiacrylate, hydroxy pivalic acid neopentylglycol diacrylate, EO-modified bisphenol A diacrylate, polyethyleneglycol diacrylate, pentaerythritol triacrylate, pentaerythritol tetraacrylate, pentaerythritol hexaacrylate, EO-modified glycerol triacrylate, trimethylol propane triacrylate, EO-modified trimethylol propane triacrylate, 2-naphtho-1-oxyethyl acrylate, 2-carbazoil-9-ethylacryate, (trimethylsilyloxy) dimethylsilylpropyl acrylate, vinyl-1-naphthoate, N-vinyl carbazole, 2,4,6-tribromophenylacrylate, pentabromoacrylate, phenyltioethylacrylate, and tetrahydrofurfurylacrylate.

Examples of the cationic polymerizable monomer include bisphenol A epoxy resins, phenol novolac epoxy resins, glycerol triglycidyl ether, 1,6-hexane glycidyl ether, vinyltrimethoxysilane, 4-vinylphenyl trimethoxysilane, γ-methacryroxypropyl triethoxysilane, and compounds represented by the following formulas (M1) to (M6). These monomers may be used singly or in combination.

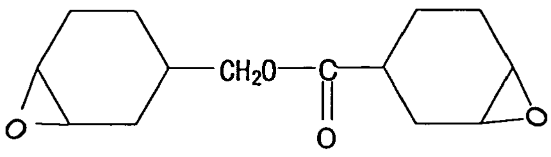

Structural Formula (M1)

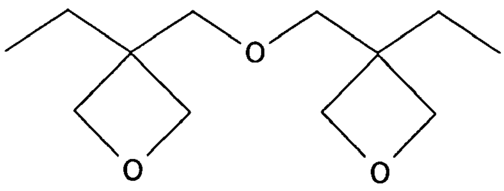

Structural Formula (M2)

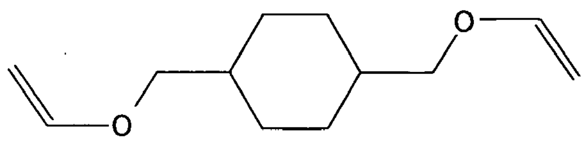

Structural Formula (M3)

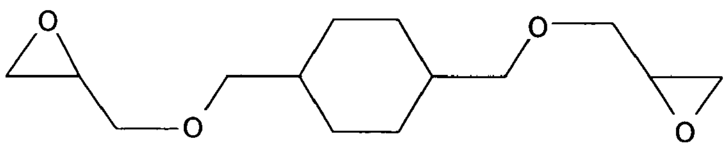

Structural Formula (M4)

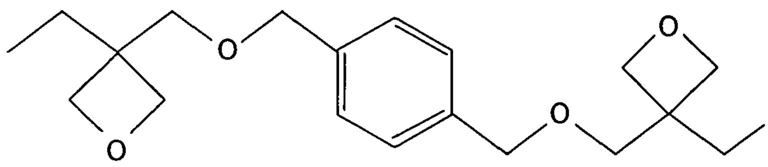

Structural Formula (M5)

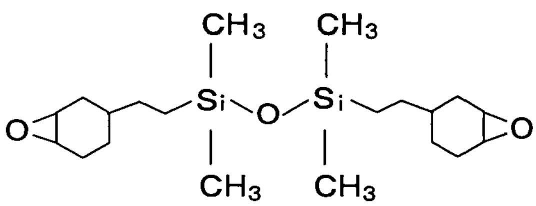

Structural Formula (M6)

-Photoinitiator-

The photoinitiator is not particularly limited as long as it is sensitive to recording light, and examples thereof include materials that can trigger radical polymerization, cationic polymerization, and crosslinking reactions by irradiation with light.

Examples of the photoinitiator include 2,2'-bis(o-chlorophenyl)-4, 4', 5, 5'-tetraphenyl-1, 1'-biimidazole, 2,4, 6-tris(trichloromethyl)-1, 3, 5-triazine, 2,4-bis (trichloromethyl)-6-(p-methoxyphenylvinyl)-1, 3, 5-triazine, diphenyl iodonium

tetrafluoroborate, diphenyl iodonium hexafluorophosphate, 4, 4'-di-t-butylphenyl iodonium tetrafluoroborate, 4-diethylaminophenylbenzene diazonium hexafluorophotophate, benzoin, 2-hydroxy-2-methyl-1-phenylpropane-2-one, benzophenon, thioxanthone, 2, 4, 6-trimethyl benzoyl diphenyl acyl phosphine oxide, triphenyl butylborate tetraethylammonium, bis($\eta^5$-2,4-cyclopentadiene-1-yl)-bis[2,6-difluoro-3-(1H-pyrrole-1-yl)phenyl]titaniu m, and diphenyl-4-phenylthiophenylsulfonium hexafluorophosphate. These photoinitiators may be used singly or in combination. In addition, sensitizing dyes may be used together with the photoinitiator, depending on the wavelength of light to be applied.

-Sensitizing dye-

As the sensitizing dye, known compounds disclosed in, for example, "Research Disclosure", vol. 200, item 20036, December 1980; and K. Tokumaru and M. Ogawara ed., "Zoukanzai" (Sensitizers), pp. 160-163, Kodansha Ltd., 1987 can be used.

Examples of the sensitizing dye include spectral sensitizing dyes. Examples of the spectral sensitizing dye include 3-ketocoumarin compounds disclosed in JP-A No. 58-15603, thiopyrylium salts disclosed in JP-A No. 58-40302, naphthothiazole merocyanine compounds disclosed in JP-B Nos. 59-28328 and 60-53300, and merocyanine compounds disclosed in JP-B Nos. 61-9621 and 62-3842, and JP-A Nos. 59-89303 and 60-60104.

Dyes disclosed in "Kinousei Shikiso no Kagaku" (Chemistry of Functional Dyes), pp. 393-416, CMC Press 1981; and, "Shikizai" (Colored Materials), vol. 60(4), pp. 212-224; (1987) can also be exemplified, and specific examples thereof include cationic methine dyes, cationic carbonium dyes, cationic quinonimine dyes, cationic indoline dyes and cationic styryl dyes.

The spectral sensitizing dye also include keto dyes such as coumarin (including ketocoumarin and sulfonocoumarin) dyes, merostyryl dyes, oxonole dyes and hemioxonole dyes; non-keto dyes such as non-ketopolymethine dyes, triarylmethane dyes, xanthene dyes, anthracene dyes, rhodamine dyes, acridine dyes, aniline dyes and azo dyes; non-ketopolymethine dyes such as azomethine dyes, cyanine dyes, carbocyanine dyes, dicarbocyanine dyes, tricarbocyanine dyes, hemicyanine dyes and styryl dyes; and quinonimine dyes such as azine dyes, oxazine dyes, thiazine dyes, quinoline dyes and thiazole dyes.

The spectral sensitizing dye may be used singly or in combination.

-Binder resin-

The binder resin is added in order to increase coating capability, strength of the resultant film and holographic recording characteristics, and is appropriately selected in light of its compatibility with hologram material and photothermal conversion material. The binder resin is not particularly limited and can be appropriately selected from those known in the art; examples thereof include polyvinylalcohol resins; gelatins; vinyl chloride/vinyl acetate copolymers; copolymers of vinyl chloride or vinyl alcohol and at least one of malleic acid and acrylic acid; vinyl chloride/vinylidene chloride copolymers; vinyl chloride/acrylonitrile copolymers; ethylene/vinyl acetate copolymers; celluloses derivatives such as nitrocellulose resins; polyacrylic resins; polyvinylacetal resins; polyvinylbutyral resins; epoxy resins; phenoxy resins; polyurethane resins; polycarbonate resins; novolac resins; soluble nylons; polystyrene resins; melamine resins; and formalin resins. These materials can be used singly or in combination. In addition, polar groups (e.g., epoxy group, $CO_2H$, OH, $NH_2$, $SO_3M$, $OSO_3M$, $PO_3M_2$, and $OPO_3M_2$, where M represents a hydrogen atom, alkali metal, or ammonium and if two or more M's appear, they may be different) are preferably introduced into the molecules of the above-listed binder resins in order to increase their dispersibility and durability. The content of such polar groups is preferably $10^{-6}$ to $10^{-4}$ equivalents per gram of binder resin. The binder resins may be cured by the addition of a known hemiacetal or isocyanate crosslinking agent.

The content of the binder in the solid components of the recording layer is not particularly limited and can be appropriately set depending on the intended purpose; it is preferably 10% by mass to 95% by mass, more preferably 35% by mass to 90% by mass. If the content of the binder is less than 10% by mass, interference images may not be obtained stably, whereas if the content exceeds 95% by mass, it may result in poor diffraction efficiency.

The content of the binder in the photosensitive layer is preferably 10 % by mass to 95% by mass, more preferably 35% by mass to 90% by mass of the total solid components in the photosensitive layer.

-Polymerization inhibitor and antioxidant-

Polymerization inhibitors and/or antioxidants may be added in order to improve the shelf life of the recording layer. Examples of such polymerization inhibitors and antioxidants include hydroquinones, p-benzoquinone, hydroquinone monoethylether, 2,6-di-t-butyl-p-cresol, 2,2'-methylenebis(4-methyl-6-t-butylphenol), triphenyl phosphite, trisnonylphenyl phosphite, phenothiazine, and N-isopropyl-N'-phenyl-p-phenylenediamine. Among these, triphenyl phosphate and phenothiazine are preferable. These may be used singly or in combination.

The amount of the polymerization inhibitor and antioxidant to be added is 3% by mass or less of the total polymerizable monomers to be used in the composition; if it exceeds 3% by mass, the rate of polymerization reactions may be reduced, or polymerization reactions may not take place in some cases.

-Additional components contained in recording layer-

In order to improve the sensitivity of the recording layer, a photothermal conversion material may be contained. For the photothermal conversion material, see the description in Japanese Patent Application No. 2005-84780

In addition, in order to mitigate change in volume of the photopolymer at the time of polymerization, a component that diffuses in the direction opposite to the direction in which polymerized components are diffused may be added, or a compound having a structure that breaks up by treatment with acids may be added in addition to polymers.

<Filter layer>

The filter layer serves to eliminate the occurrence fluctuations in the wavelengths selected to be reflected in a case where the incident angle is changed, and has a function to prevent irregular reflection of the information light and reference light at the reflective film of an optical recording medium to thereby prevent the occurrence of noise. Providing such a filter layer on the optical recording medium will lead to high definition and excellent diffraction efficiency.

The filter for optical recording medium preferably has a function to admit light of first wavelength and reflect light of second wavelength which is different from the first wavelength, wherein first wavelength is preferably 600 nm to 900 nm, and the second wavelength is preferably 350 nm to 600 nm. To achieve this, an optical recording medium in which a recording layer, filter layer and servo pit pattern are laminated in this order from the optical system is preferable.

The filter layer preferably has an optical transmittance of 50% or more, more preferably 80% or more for light of wavelength 655 nm, and has a reflectivity of 30% or more, more preferably 40% or more for light of wavelength 532 nm, both incident at an angle of within ±40°.

The filter layer is not particularly limited and can be appropriately selected depending on the intended purpose. For example, the filter layer is a laminate of a dielectric material-deposited layer, a single-layered or multilayered cholesteric liquid crystal layer, and additional layers provided on an as-needed basis. In addition, the filter layer may comprise a colored material-containing layer, and the cholesteric liquid crystal layer may be disposed thereon or the dielectric material-deposited layer may be disposed thereon.

The filter layer may be directly applied and deposited onto the support together with the recording layer. Alternatively, the filter layer may be previously deposited on a base material such as a film to prepare a filter for optical recording media, and the filter may be deposited on the support.

-Dielectric material-deposited layer-

The dielectric material-deposited layer is a laminate of multiple dielectric thin films with different refraction indices. For the dielectric material-deposited layer to serve as a reflective film through which light of desired wavelength passes, it is preferably a laminate of alternating dielectric thin films with high and low indices of refraction; however, three or more different dielectric thin films may be laminated. When the colored material-containing layer is provided, it is formed under the dielectric material-deposited layer.

The number of the dielectric thin films to be laminated is preferably 2 to 20, more preferably 2 to 12, still further preferably 4 to 10, most preferably 6 to 8. If the number of the dielectric thin films to be laminated is greater than 20, it results in the reduction in productivity because of multilayer vapor deposition. The object and effect of the invention cannot be achieved in some cases.

The order in which the dielectric thin films are laminated is not particularly limited, and can be appropriately determined depending on the intended purpose. A dielectric thin film with low refractive index is first deposited in a case where an adjacent dielectric thin film has high refractive index. On the other hand, a dielectric thin film with high refractive index is first deposited in a case where an adjacent dielectric thin film has low refractive index. The criteria of refractive index for determining whether a dielectric thin film has high or low refractive index is preferably set to 1.8; note, however, that this determination is made on an arbitrary basis. That is, dielectric thin films with different refractive indices equal to or greater than 1.8 (i.e., there are dielectric thin films with high and low refractive indices) may be used to form such a laminate.

The material for the dielectric thin film with high refractive index is not particularly limited and can be appropriately selected depending on the intended purpose; examples thereof include $Sb_2O_3$, $Sb_2S_3$, $Bi_2O_3$, $CeO_2$, $CeF_3$, $HfO_2$, $La_2O_3$, $Nd_2O_3$, $Pr_6O_{11}$, $Sc_2O_3$, SiO, $Ta_2O_5$, $TiO_2$, TlCl, $Y_2O_3$, ZnSe, ZnS and $ZrO_2$. Among these, $Bi_2O_3$, $CeO_2$ $CeF_3$, $HfO_2$, SiO, $Ta_2O_5$, $TiO_2$, $Y_2O_3$, ZnSe, ZnS and $ZrO_2$ are preferable, and SiO, $Ta_2O_5$, $TiO_2$, $Y_2O_3$, ZnSe, ZnS and $ZrO_2$ are more preferable.

The material for the dielectric thin film with low refractive index is not particularly limited and can be appropriately selected depending on the intended purpose; examples thereof include $Al_2O_3$, $BiF_3$, $CaF_2$, $LaF_3$, $PbCl_2$, $PbF_2$, LiF, $MgF_2$, MgO, $NdF_3$, $SiO_2$ $Si_2O_3$, NaF, $ThO_2$ and $ThF_4$. Among these, $Al_2O_3$, $BiF_3$, $CaF_2$, $MgF_2$, MgO, $SiO_2$ and $Si_2O_3$ are preferable, and $Al_2O_3$, $CaF_2$, $MgF_2$, MgO, $SiO_2$ and $Si_2O_3$ are more preferable.

Note that the atomic ratio in the material for the dielectric thin film is not particularly limited and can be appropriately set depending on the intended purpose. The atomic ratio can be adjusted by changing the concentration of atmosphere's gas upon deposition of dielectric thin films.

The method for depositing the dielectric thin film is not particularly limited and can be appropriately selected depending on the intended purpose. For example, a vacuum vapor deposition process such as ion plating and ion beam, a physical vapor deposition (PVD) such as sputtering, and a chemical vapor deposition (CVD) can be used. Among these methods, a vacuum vapor deposition and sputtering are preferable, and sputtering is most preferable.

For the sputtering, DC sputtering is preferable because it offers high deposition rate. Note that highly conductive material is preferably used when DC sputtering is employed.

Examples of the method for depositing multiple dielectric thin films by sputtering include: (1) a single-chamber method, where multiple dielectric thin films are alternately or sequentially deposited using a single chamber; and (2) a multi-chamber method, where multiple dielectric thin films are sequentially deposited using multiple chambers. In view of the productivity and to prevent contamination among materials, the multi-chamber method is most preferable.

The thickness of the dielectric thin film is preferably $\lambda/16$ to $\lambda$, more preferably $\lambda/8$ to $3\lambda/4$, most preferably $\lambda/6$ to $3\lambda/8$ in terms of optical wavelength.

-Colored material-containing layer-

The colored material-containing layer comprises at least one colored material of a pigment and dye, and comprises a binder resin, and additional components on an as-needed basis.

The colored material is not particularly limited and can be appropriately selected depending on the intended purpose, however, a red pigment is preferable. Preferably, the red pigment has an optical transmittance of 33% or less for light of wavelength 532 nm and 66% or more for light of wavelength 655 nm.

Suitable examples of the binder resin include polyvinylalcohol resins.

It is preferable that the surface of the colored material-containing layer has been subjected to a rubbing treatment.

-Cholesteric liquid crystal layer-

The cholesteric liquid crystal layer contains at least a cholesterol derivative, or a nematic liquid crystal compound and a chiral compound, and further contains a polymerizable mononer, and additional components on as-needed basis.

The cholesteric liquid crystal layer may be either a single-layered cholesteric liquid crystal layer or a multilayered cholesteric liquid crystal layer.

In the optical recording medium in which two or more cholesteric liquid crystal layers are laminated, fluctuations in the wavelengths selected to be reflected do not occur in a case where the incident angle is changed, and the information light and reference light used when recording or reproducing, further reproduction light do not reach the reflective film. Thus, generation of diffusion light due to diffuse reflection on a reflective surface can be prevented. Therefore, a CMOS sensor or CCD does not detect noises to be caused by the diffusion light and to be superimposed on reconstructed images, allowing the detection of reconstructed images to such a degree that at least error can be corrected. Noise components caused by the diffusion light becomes a big problem with the increase of multiplicity. Namely, the larger the multiplicity becomes, for example, if the multiplicity becomes 10 or more, the result will be extremely low diffraction efficiency from one hologram, making it difficult to detect reconstructed images in the presence of diffusion noises. This configuration can remove such difficulty and can achieve higher density image recording than ever before.

The cholesteric liquid crystal layer preferably has a circularly polarizing function. The cholesteric liquid crystal layer selectively reflects light components which have been circularly polarized in the direction in which the liquid crystal helix rotates (i.e., to the right or left) and which have a wavelength that equals to the pitch of the liquid crystal helix. The cholesteric liquid crystal layer utilizes the selective reflection characteristics to separate a particular circularly polarized component of a particular wavelength from natural light of different wavelengths, and reflects the other light components.

The filter for optical recording media preferably has a reflectivity of 40% or more for light of a wavelength range of $\lambda_0$ to $\lambda_0/\cos20°$ (where $\lambda_0$ represents the wavelength of irradiation light) incident at an angle of $\pm20°$ (measured from the normal of the surface of the recording layer). Most preferably, the filter for optical recording media has a reflectivity of 40% or more for light of a wavelength range of $\lambda_0$ to $\lambda_0/\cos40°$ (where $\lambda_0$ represents the wavelength of irradiation light) incident at an angle of $\pm40°$ (measured from the normal of the surface of the recording layer). If the optical reflectivity is 40% or more for light of a wavelength range of $\lambda_0$ to $\lambda_0/\cos20°$, especially $\lambda_0$ to $\lambda_0/\cos40°$ (where $\lambda_0$ represents the wavelength of irradiation light), it is made possible to eliminate the dependency of reflectivity on incident angle and to

adopt optical lens system that is used for general optical recording media. For this purpose, the cholesteric liquid crystal layer preferably has a large selectively-reflecting wavelength range.

More specifically, when a single-layer cholesteric liquid crystal layer is used, the selectively-reflecting wavelength range $\Delta\lambda$ is expressed by the following Equation (1) and thus it is preferable to use liquid crystal with large (ne - no):

$$\Delta\lambda = 2\lambda(ne - no) / (ne + no) \ldots \text{Equation (1)}$$

where "no" represents the refractive index of the nematic liquid crystal molecules for normal light, contained in the cholesteric liquid crystal layer, "ne" represents the refractive index of the nematic liquid crystal molecules for abnormal light, and $\lambda$ represents the central wavelength of light selectively reflected.

As described in Japanese Patent Application No. 2004-352081, it is preferable to use photoreactive chiral compounds whose helical pitch can be largely altered by irradiation with light and to use a filter for optical recording medium in which helical pitch is continuously changed in the thickness direction of the liquid crystal layer by adjusting the content of the photoreactive chiral compound and UV irradiation time.

In the case of a multilayered cholesteric liquid crystal layer, cholesteric liquid crystal layers with different $\lambda$ values, where the helices rotate to the same direction, are preferably laminated.

The cholesteric liquid crystal layer is not particularly limited as long as it has the foregoing characteristics, and can be appropriately selected depending on the intended purpose. As described above, the cholesteric liquid crystal layer contains a nematic liquid crystal compound and a chiral compound, and further contains polymerizable mononers, and additional components on as-needed basis.

-Nematic liquid crystal compounds-

The nematic liquid crystal compounds features that their liquid crystal phase solidifies under the liquid crystal transition temperature, and can be appropriately selected from liquid crystal compounds, high-molecular liquid crystal compounds and polymerizable liquid crystal compounds, all of which have refractive index anisotropy $\Delta n$ of 0.10 to 0.40. For example, such nematic liquid crystal compound molecules that are in the liquid crystal state by treatment with heat can be aligned by use of a surface-rubbed alignment substrate, followed by a cooling treatment or the like to allow them to be immobilized to the substrate to serve as a solid phase.

The nematic liquid crystal compound is not particularly limited and can be appropriately selected depending on the intended purpose. Nematic liquid crystal compounds that have polymerizable groups in their molecule are preferable for the purpose of ensuring sufficient curing capability, and ultraviolet (UV) polymerizable liquid crystal compounds are suitably used. Examples of such ultraviolet (UV) polymerizable liquid crystal compounds include the following commercially available products: PALIOCOLOR LC242 (bland name, produced by BASF Corp.); E7 (bland name, produced by Merck Ltd.); LC-Silicon-CC3767 (bland name, produced by Wacker-Chem); and L35, L42, L55, L59, L63, L79 and L83 (bland name, produced by Takasago International Corp.).

The content of the nematic liquid crystal compound is preferably 30% by mass to 99% by mass, more preferably 50% by mass to 99% by mass of the total solid components in each of the cholesteric liquid crystal layer. If the content of the nematic liquid crystal compound is less than 30% by mass, it may result in poor alignment of nematic liquid crystal molecules.

-Chiral compounds-

In the case of a multilayered cholesteric liquid crystal layer, the chiral compound is not particularly limited and can be appropriately selected from those known in the art; in view of the hues of the liquid crystal compounds and for enhanced color purity, for example, isomannide compounds, catechine compounds, isosorbide compounds, fenchone compounds and carvone compounds can be used. These chiral compounds may be used singly or in combination.

In addition, commercially available chiral compounds can also be used; examples thereof include S101, R811 and CB15 (bland name, produced by Merck Ltd.); and PALIOCOLOR LC756 (bland name, produced by BASF Corp.).

The content of the chiral compound in each liquid crystal layer of the multilayered cholesteric liquid crystal layer is preferably 30% by mass or less, more preferably 20% by mass or less of the total solid components in each liquid crystal layer. If the content of the chiral compound is greater than 30% by mass, it may result in poor alignment of cholesteric liquid crystal molecules.

-Polymerizable monomers-

It is also possible to add polymerizable monomers to the cholesteric liquid crystal layer in order to, for example, increase the degree of cure in the layer (e.g., layer strength). Combined use of polymerizable monomers can increase the strength of the cholesteric liquid crystal layer, where different twisting degrees have been set for liquid crystals through which light propagates (e.g., the distribution of wavelengths of light to be reflected has been created) and where the helical structure (i.e., selective reflection capability) has been fixed. Note, however, that such polymerizable monomers need not necessarily be added if the liquid crystal compound bears polymerizable groups in a molecule.
The polymerizable monomers are not particularly limited and can be appropriately selected from those known in the art; examples thereof include monomers bearing ethylenically unsaturated bonds, and specific examples of such monomers include multifunctional monomers such as pentaerythritoltetraacrylate and dipentaerythritolhexaacrylate. These monomers can be used singly or in combination.
The content of the polymerizable monomers is preferably 50% by mass or less, more preferably 1% by mass to 20% by mass of the total solid components in the cholesteric liquid crystal layer. If the content of the polymerizable monomers is greater than 50% by mass, it may inhibit the alignment of cholesteric liquid crystal molecules.

-Additional components-

The additional components are not particularly limited and can be appropriately selected depending on the intended purpose; examples thereof include photoinitiators, sensitizers, binder resins, polymerization inhibitors, solvents, surfactants, thickeners, dyes, pigments, ultraviolet absorbers and gelling agents.
The photoinitiators are not particularly limited and can be appropriately selected from those known in the art; examples thereof include p-methoxyphenyl-2,4-bis(trichloromethyl)-s-triazine, 2-(p-buthoxystyryl)-5-trichloromethyl-1,3,4-oxadiazole, 9-phenylacridine, 9,10-dimethylbenzphenazine, benzophenone/Michler's ketone, hexaarylbiimidazole/mercaptobenzoimidazole, benzyldimethylketal, acylphosphine derivatives, and thioxanthone/amine. These photoinitiators may be used singly or in combination.
In addition, commercially available photoinitiators can also be used; examples thereof include IRGA CURE 907, IRGA CURE 369, IRGA CURE 784 and IRGA CURE 814 (bland name, produced by Ciba Specialty Chemicals); and Lucirin TPO (bland name, produced by BASF Corp.).
The content of the photoinitiator is preferably 0.1% by mass to 20% by mass, more preferably 0.5% by mass to 5% by mass of the total solid components in the cholesteric liquid crystal layer. If the content of the photoinitiator is less than 0.1% by mass, it may take long time for the polymerization because of reduced curing efficiency upon irradiation with light. If the content of the photoinitiator is greater than 20% by mass, it may result in poor optical transmittance over the spectrum from ultraviolet to visible light.
The sensitizer is added on an as-needed basis in order to increase the degree of cure in the cholesteric liquid crystal layer.
The sensitizer is not particularly limited and can be appropriately selected from those known in the art; examples thereof include diethylthioxanthone and isopropylthioxanthone.
The content of the sensitizer is preferably 0.001% by mass to 1% by mass of the total solid components in the cholesteric liquid crystal layer.
The binder resin is not particularly limited and can be appropriately selected from those known in the art; examples thereof include polyvinyl alcohols; polystyrene compounds such as polystyrene and poly-$\alpha$-methylstyrene; cellulose resins such as methylcellulose, ethylcellulose and acetylcellulose; acid cellulose derivatives bearing carboxylic groups on their side chains; acetal resins such as polyvinyl formal and polyvinyl butyral; methacrylic acid copolymers; acrylic acid copolymers; itaconic acid copolymers; crotonic acid copolymers; malleic acid copolymers; partially-esterified malleic acid copolymers; homopolymers of acrylic acid alkylesters or homopolymers of methacrylic acid alkyl esters; and polymers with additional hydroxyl groups. These binder resins may be used singly or in combination.
Examples of alkyl groups in the homopolymers of acrylic acid alkylesters or homopolymers of methacrylic acid alkyl esters include methyl group, ethyl group, n-propyl group, n-butyl group, iso-butyl group, n-hexyl group, cyclohexyl group and 2-ethylhexyl group.
Examples of the polymers with additional hydroxyl groups include benzyl(meth)acrylate/(homopolymers of methacrylic acid) acrylic acid copolymers, and multicomponent copolymers of benzyl(meth)acrylate/(meth)acrylic acid/other monomers.
The content of the binder resin is preferably 80% by mass or less, more preferably 50% by mass or less of the total solid components in the cholesteric liquid crystal layer. If the content of the binder resin is greater than 80% by mass, it may result in poor alignment of cholesteric liquid crystal molecules.
The polymerization inhibitor is not particularly limited and can be appropriately selected depending on the intended purpose; examples thereof include hydroquinones, hydroquinone monomethylethers, phenothiazines, benzoquinones and derivatives thereof.

The content of the polymerization inhibitor is preferably 10% by mass or less, more preferably 0.01% by mass to 1% by mass of the total solid components in the polymerizable monomers.

The solvent is not particularly limited and can be appropriately selected from those known in the art; examples thereof include alkoxypropionic acid esters such as 3-methoxypropionic acid methylester, 3-methoxypropionic acid ethylester, 3-methoxypropionic acid propylester, 3-ethoxypropionic acid methylester, 3-ethoxypropionic acid ethylester and 3-ethoxypropionic acid propylester; alkoxy alcohol esters such as 2-methoxypropylacetate, 2-ethoxypropylacetate and 3-methoxybutylacetate; lactic acid esters such as methyl lactate and ethyl lactate; ketones such as methyl ethyl ketone, cyclohexanone and methylcyclohexanone; γ-butyrolactone; N-methylpyrrolidone; dimethylsulfoxide; chloroform; and tetrahydrofuran. These solvents may be used singly or in combination.

The cholesteric liquid crystal layer can be formed in the following procedure: For example, a coating solution for cholesteric liquid crystal layer prepared by use of the solvent is applied on the base material (note that this coating solution is prepared for each liquid crystal layer in the case of a multilayered cholesteric liquid crystal layer). Thereafter, the coating solution is dried, and cured by irradiating it with ultraviolet light.

For mass production, the cholesteric liquid crystal layer can be formed in the following procedure: The base material is previously wound in a roll shape, and the coating solution is then applied on the base material using a long, continuous coater such as a bar coater, die coater, blade coater, or curtain coater.

Examples of the coating method include a spin coating method, casting method, roll coating method, flow coating method, printing method, dip coating method, casting deposition method, bar coating method and gravure printing method.

The UV irradiation condition is not particularly limited and can be appropriately determined depending on the intended purpose; the wavelength of UV light to be applied is preferably 160 nm to 380 nm, more preferably 250 nm to 380 nm; irradiation time is preferably 0.1 second to 600 seconds, more preferably 0.3 second to 300 seconds. By adjusting the UV irradiation condition, it is possible to change the helical pitch in the cholesteric liquid crystal layer, in which the photoreactive chiral compound is used, continuously in the thickness direction of the liquid crystal layer.

It is also possible to add an ultraviolet absorber to the cholesteric liquid crystal layer in order to adjust the UV irradiation condition. The ultraviolet absorber is not particularly limited and can be appropriately selected depending on the intended purpose; suitable examples thereof include benzophenone ultraviolet absorbers, benzotriazole ultraviolet absorbers, salicylic acid ultraviolet absorbers, cyanoacrylate ultraviolet absorbers and oxalic acid anilide ultraviolet absorbers. Specific examples of these ultraviolet absorbers are disclosed in JP-A Nos. 47-10537, 58-111942, 58-212844, 59-19945, 59-46646, 59-109055 and 63-53544; JP-B Nos. 36-10466, 42-26187, 48-30492, 48-31255, 48-41572, 48-54965, and 50-10726; and U.S. Patent Nos. 2,719,086, 3,707,375, 3,754,919 and 4,220,711.

In the case of a multilayered colesteric liquid crystal layer, the thickness of each cholesteric liquid crystal layer is preferably 1 μm to 10 μm, more preferably 2 μm to 7 μm. If the thickness of the cholesteric liquid crystal layer is less than 1 μm, it results in poor selective reflectivity. If the thickness of the cholesteric liquid crystal layer is greater than 10 μm, uniformly aligned liquid crystal molecules in the cholesteric liquid crystal layer may orient in random directions.

The total thickness of the cholesteric liquid crystal layer in a multilayered cholesteric liquid crystal layer (or the thickness of a single-layered liquid crystal layer) is preferably 1 μm to 30 μm, more preferably 3 μm to 10 μm.

<The production process for a filter for optical recording medium which has a colesteric liquid crystal layer>

The process for producing the filter is not particularly limited and can be appropriately selected depending on the intended purpose.

The filter for optical recording media is not particularly limited and can be appropriately selected depending on the intended purpose. The filter is preferably processed into a disc-shape together with a base material through, for example, a stamping process, and is preferably disposed on the second substrate of an optical recording medium. Alternatively, the filter can be directly disposed on the second substrate without interposing a base material between them in a case where the filter is intended to be used for the filter layer of the optical recording medium.

-Base material-

The base material is not particularly limited and can be appropriately selected depending on the intended purpose. For example, materials used for the foregoing support for the first form may be used.

The base material may be either a freshly prepared one or a commercially available one.

The thickness of the base material is not particularly limited and can be appropriately set depending on the intended purpose; the thickness is preferably 10 μm to 500 μm, more preferably 50 μm to 300 μm. If the thickness of the base material is less than 10 μm, the substrate bends and thus its adhesion properties with other components are reduced. If the thickness of the base material is greater than 500 μm, the focus of information light needs to be shifted

by a large amount from the focus of reference light, leading to the necessity of preparing a big optical system. For bonding a film through which light of desired wavelength passes, known adhesives can be used in any combination.

The adhesive is not particularly limited and can be appropriately selected depending on the intended purpose; examples thereof include UV curable adhesives, emulsion adhesives, one-component curable adhesives and two-component curable adhesives. These known adhesives can be used in any combination.

The agglutinant is not particularly limited and can be appropriately selected depending on the intended purpose; examples thereof include rubber agglutinants, acrylic agglutinants, silicone agglutinants, urethane agglutinants, vinylalkyl ether agglutinants, polyvinylalcohol agglutinants, polyvinylpyrrolidone agglutinants, polyacrylamide agglutinants and cellulose agglutinants.

The thickness of the adhesive or agglutinant applied is not particularly limited and can be appropriately set depending on the intended purpose. In the case of adhesive, the thickness is preferably 0.1 μm to 10 μm, more preferably 0.1 μm to 5 μm in light of the optical characteristics and slimness. In the case of agglutinant, the thickness is preferably 1 μm to 50 μm, more preferably 2 μm to 30 μm.

Note, however, that it is possible to directly form the filter layer on the substrate depending on the circumstances.

(Method for producing optical recording medium)

The method for producing an optical recording medium of the invention is not particularly limited as long as it comprises at least a step of forming a recording layer and a step of forming a first gap layer and can be appropriately selected depending on the intended purpose. For example, the method for producing an optical recording medium of the invention comprises a step of preparing a composition, a step of forming a recording layer, a step of forming a filter layer, a step of forming a first gap layer, and a step of forming a laminate and may further comprise additional steps on an as-needed basis.

<Step of preparing composition>

The step of preparing a composition is a step in which a composition for optical recording (hereinafter, may be referred to as "photosensitive composition") is prepared, where the composition for optical recording that contains a photopolymer consisting of a monomer, photoinitiator, sensitizer, oligomers, binder, and the like; and additional components appropriately selected on an as-needed basis is prepared by dissolving, dispersing, mixing, etc. with a solvent. The preparation is carried out under the conditions of, e.g. a temperature of 23°C and humidity of 10% and in an environment of low humidity dry.

<Step of forming recording layer>

The step of forming a recording layer is a step in which a recording layer for recording information by holography is disposed on the filter layer, or when a second gap layer is disposed on the filter layer, on the second gap layer by applying the composition for optical recording prepared in the step of preparing a composition.

The recording layer may be disposed by any method without limitation and the method can be appropriately selected depending on the intended use. For example, the recording layer may be disposed by means of a wet deposition method. Formation of the recording layer by means of the wet deposition method can be performed by using a coating solution obtained by dissolving and/or dispersing the recording layer material in a solvent, (i.e., by applying the coating solution on a support and drying it). The wet deposition method is not particularly limited and can be appropriately selected from those known in the art depending on the intended use; examples thereof include an ink-jet method, spin coating method, kneader coating method, bar coating method, blade coating method, casting method, dipping method, and curtain coating method.

The thickness of the recording layer is not particularly limited and can be appropriately set depending on the intended purpose; the thickness of the recording layer is preferably 1 μm to 1,000 μm, more preferably 100 μm to 700 μm.

If the thickness of the recording layer is within a preferable range, it will result in excellent S/N ratios even when 10- to 300-fold shift-multiplexing recording operation is performed; more excellent S/N ratios can be obtained in a more preferable thickness range.

<Step of forming filter layer>

The step of forming a filter layer is a step in which the filter for optical recording medium of the invention is processed into the optical recording medium shape, and the processed filter is bonded to the second substrate to form a filter layer. The process for producing the filter for the optical recording medium of the invention is as described above. Note, however, that it is possible to directly form the filter layer on the substrate depending on the circumstances. For

example, a coating solution for colored material-containing layer is applied onto the substrate to form a colored material-containing layer, and a dielectric thin film is formed on the colored material-containing layer by sputtering.

The shape of the optical recording medium is, for example, disc shape or card-like shape.

The method for processing the filter into the optical recording medium shape is not particularly limited, and can be appropriately selected depending on the intended purpose. For example, a cutting process with a press cutter, or a stamping process with a stamping cutter can be used. The filter is bonded to the second substrate by use of, for example, an adhesive or agglutinant while avoiding entry of air bubbles.

The adhesive is not particularly limited and can be appropriately selected depending on the intended purpose; examples thereof include UV curable adhesives, emulsion adhesives, one-component curable adhesives and two-component curable adhesives. These known adhesives can be used in any combination.

The agglutinant is not particularly limited and can be appropriately selected depending on the intended purpose; examples thereof include rubber agglutinants, acrylic agglutinants, silicone agglutinants, urethane agglutinants, vinylalkyl ether agglutinants, polyvinylalcohol agglutinants, polyvinylpyrrolidone agglutinants, polyacrylamide agglutinants and cellulose agglutinants.

The thickness of the adhesive or agglutinant applied is not particularly limited and can be appropriately set depending on the intended purpose. In the case of adhesive, the thickness is preferably 0.1 μm to 10 μm, more preferably 0.1 μm to 5 μm in light of the optical characteristics and slimness. In the case of agglutinant, the thickness is preferably 1 μm to 50 μm, more preferably 2 μm to 30μ m.

<Step of forming first gap layer>

The step of forming a first gap layer is a step in which a first gap layer is formed between the second substrate and the filter layer. The method for forming the first gap layer is not particularly limited and can be appropriately selected depending on the intended purpose. The first gap layer can be formed on a second substrate by, for example, the spin coating method, the method in which a sheet member is bonded, the vapor deposition, or the sputtering.

<Step of forming laminate>

The step of forming a laminate is a step in which the first substrate is bonded to the second substrate over which the recording layer, the filter layer and first gap layer are formed by the step of forming a recording layer, the step of forming a filter layer, and the step of forming a first gap layer to form a laminate and may comprise additional steps appropriately selected on an as-needed basis.

The method for bonding is not particularly limited and can be appropriately selected depending on the intended purpose. For example, the first substrate, the second substrate, and additional layers on an as-needed basis are bonded with an adhesive, pressure bonded without using an adhesive, or bonded in vacuum.

The method for bonding with an adhesive is carried out as follows. Outer circumferences of the first substrate, the second substrate, and additional layers on an as-needed basis are adjusted, an adhesive is applied between each layer and bonded at 23°C to 100°C with a pressure of 0.001 MPa to 0.5 MPa given from outside.

Bonding is preferably performed in vacuum for adhesion while avoiding entry of air bubbles during the bonding.

-Adhesive-

The adhesive is not particularly limited and can be appropriately selected depending on the intended purpose; examples thereof include acrylic adhesives, epoxy adhesives, and rubber adhesives.

Among these, acrylic adhesives and epoxy adhesives are preferable in terms of transparency.

The method for pressure bonding without an adhesive can be carried out by allowing layers to adhere to each other utilizing adhesiveness of each layer to form a laminate. Outer circumferences of the first substrate, the second substrate, and additional layers on an as-needed basis are adjusted and bonded at 23°C to 100°C with a pressure of 0.001 MPa to 0.5 MPa given from outside. Bonding is preferably performed in vacuum for adhesion while avoiding entry of air bubbles during the adhesion.

<Additional step>

The additional step is not particularly limited and can be appropriately selected depending on the intended purpose; examples thereof include a step of forming a second gap layer which forms a second gap layer between the recording layer and the filter layer.

(Optical recording method and optical reproducing method)

The optical recording method is not particularly limited and can be appropriately selected depending on the intended purpose. For example, the optical recording method uses the so-called collinear technology, where information light and reference light are applied in such a way that the optical axis of the information light is collinear with that of the reference light, and optical interference between the information light and reference light creates an interference pattern, or information, to be recorded on a recording layer.

The reproducing method is not particularly limited and can be appropriately selected depending on the intended purpose. For example, the recorded information can be reproduced by applying reproduction light, the same as the reference light, onto the interference images recorded on the recording layer using the optical recording method.

In the optical recording method and reproducing method in the second form, information light with a two-dimensional intensity distribution and reference light with an intensity level equal to that of the information light are superimposed inside a photosensitive recording layer to form an interference pattern, and an optical characteristic distribution is created by means of the interference pattern, whereby information is recorded in the recording layer. Meanwhile, upon reading (reproducing) of the written information, only reproduction light, the same as the reference light, is applied onto the recording layer from the same direction, and thereby a diffracted ray is emitted from the recording layer as light that has an intensity distribution corresponding to the optical characteristic distribution formed in the recording layer.

Here, the optical recording method and reproducing method is used in an optical recording and reproducing apparatus described below.

The optical recording and reproducing apparatus used for the optical recording method and reproducing method will be described with reference to FIG. 9.

FIG. 9 is a block diagram showing an example of the entire configuration of the optical recording and reproducing apparatus. Note that this apparatus includes an optical recording apparatus and a reproducing apparatus. The optical recording and reproducing apparatus 100 includes a spindle 81 to which an optical recording medium 21 is attached, a spindle motor 82 for spinning the spindle 81, and a spindle servo circuit 83 for controlling the spindle motor 82 so that the rotation speed of the optical recording medium 21 is constant at a predetermined level.

In addition, the optical recording and reproducing apparatus 100 includes a pickup 31 which applies information light and recording reference light onto the optical recording medium 21, and applies reproduction light, the same as the reference light, onto the optical recording medium 21 to detect a diffracted ray for the reproduction of information recorded in the optical recording medium 21, and a drive device 84 that enables the pickup 31 to move in the radial direction of the optical recording medium 21.

The optical recording and reproducing apparatus 100 includes a detection circuit 85 for detecting a focus error signal FE, a tracking error signal TE and a reproduction signal RF from the output signal of the pickup 31, a focus servo circuit 86 for performing a focus servo operation by driving an actuator inside the pickup 31 on the basis of the focus error signal FE detected by the detection circuit 85 to move an objective lens (not shown) in the thickness direction of the optical recording medium 21, a tracking servo circuit 87 for performing a tracking servo operation by driving an actuator inside the pickup 31 on the basis of the tracking error signal TE detected by the detection circuit 85 to move the objective lens in the radial direction of the optical recording medium 21, and a slide servo circuit 88 for performing a slide servo operation by controlling the drive device 84 on the basis of a tracking error signal TE and commands from a controller to be described later to move the pickup 31 in the radial direction of the optical recording medium 21.

Furthermore, the optical recording and reproducing apparatus 100 includes a signal processing circuit 89 which decodes output data from a CMOS or CCD array to be described later in the pickup 31 to reproduce data recorded on the data area of the optical recording medium 21; which creates a reference clock on the basis of a reproduction signal RF detected by the detection circuit 85; and which distinguishes individual addresses, a controller 90 for controlling overall of the optical recording and reproducing apparatus 100, and a operation unit 91 for giving a variety of commands to the controller 90.

The controller 90 receives the reference clock and address information outputted from the signal processing circuit 89 and controls, for example, the pickup 31, spindle servo circuit 83 and slide servo circuit 88. The spindle servo circuit 83 receives the reference clock outputted from the signal processing circuit 89. The controller 90 includes a CPU (central processing unit), ROM (read only memory) and RAM (random access memory), and the CPU realizes the function of the controller 90 by executing programs stored in the ROM on the RAM, a working area.

The optical recording and reproducing apparatus for use in the optical recording method and reproducing method uses the optical recording medium of the invention and records interference fringes by means of information light and reference light, which is sensitized through simultaneous photothermal conversion by sensitizing light. Thus, optical recording that offers high definition and excellent diffraction efficiency can be obtained.

Hereinafter, specific examples 1 and 2 of the optical recording medium of the invention will be described in detail with reference to the drawings. The optical recording medium may be prepared without disposing the second gap

layer.

<Specific example 1 of optical recording medium>

FIG. 5 is a schematic cross-sectional view showing the structure of the optical recording medium of specific example 1 in the invention. In an optical recording medium 21 according to this specific example 1 a servo pit pattern 3 is formed on a second substrate 1 made of polycarbonate resin or glass, and the serve pit pattern 3 is coated with Al, Au, Pt or the like to form a reflective film 2. Although the servo pit pattern 3 is formed on the entire surface of the second substrate 1 in FIG. 5, it may be formed on the second substrate 1 periodically as shown in FIG. 1. In addition, the height of the servo pit pattern 3 is generally 1,750 angstrom (175 nm), far smaller than those of the other layers, including substrates.

The first gap layer 8 is formed by applying a material such as a non-thermosoftening material having a deflection temperature under load of at least 70°C or more, and UV curable resin on the reflective film 2 of second substrate 1 by spin coating or the like. The first gap layer 8 protects the reflective film 2. At the same time, the first gap layer is effective to adjust the size of holograms formed in the recording layer 4. Specifically, since somewhat large regions where optical interference between information light and recording reference light takes place need to be secured in the recording layer, it is effective to provide the first gap layer between the recording layer and the servo pit pattern.

A filter layer 6 is provided on the first gap layer 8, a second gap layer 7 is provided between the filter layer 6 and recording layer 4, and the second gap layer and recording layer 4 are sandwiched between the filter layer 6 and a first substrate 5 (a polycarbonate resin substrate or glass substrate) to constitute the optical recording medium 21.

There is a point at which both information light and reference light focus; if this area is embedded in photopolymers, excessive exposure takes places and thus an excess amount of monomers are consumed, leading to poor multiplexing recording performance. To avoid this, it is effective to provide a transparent, inert second gap layer 7.

In FIG. 5 the filter layer 6 admits only red light and reflects light of the other colors. Therefore, the information light and recording and reproduction light do not pass through the filter layer 6 because they are light of green or blue, and never reach the reflective film 2, becoming returning light emitting from the light entrance/ exit surface A.

The filter layer 6 is constituted of three cholesteric liquid crystal layers 6a, 6b, 6c whose helical pitch is continuously changed in the thickness direction thereof. The filter layer 6 may be directly provided on the first gap layer 8 with a coating method, or may be provided by stamping a film in which a cholesteric liquid crystal layer is formed on a base material into the optical disc shape. By using such three cholesteric liquid crystal layers, reflectivity of 40% or more can be realized for light of a wavelength range of $\lambda_0$ to $\lambda_0$/cos20°, especially $\lambda_0$ to $\lambda_0$/cos40° (where $\lambda_0$ represents the wavelength of irradiation light), thereby eliminating the fluctuations in the selectively-reflecting wavelength range even when the incident angle has changed.

The optical recording medium 21 of specific example 1 may be a disc shape or card-like shape. There is no need to provide a servo pit pattern in a case where the optical recording medium 21 is a card-like shape. In the optical recording medium 21 the second substrate 1 is 0.6 mm in thickness, the first gap layer 8 is 100 μm in thickness, the filter layer 6 is 2 μm to 3 μm in thickness, the second gap layer 7 is 70 μm in thickness, the recording layer 4 is 0.6 mm in thickness, and the first substrate 5 is 0.6 mm in thickness, bringing to the total to about 1.9 mm.

Next, optical operations around the optical recording medium 21 will be described with reference to FIG. 8. First, a red light beam emitted from the servo laser source is reflected by a dichroic mirror 13 by almost 100%, and passes through an objective lens 12. By this, the servo light is applied onto the optical recording medium 21 in such a way that it focuses on the reflective film 2. More specifically, the dichroic mirror 13 is so configured that it admits only green or blue light but reflects almost 100% of red light. The servo light incident from the light entrance/exit surface A of the optical recording medium 21 passes through the first substrate 5, recording layer 4, second gap layer 7, filter layer 6 and first gap layer 8, is reflected by the reflective film 2, and passes again through the first gap layer 8, filter layer 6, second gap layer 7, recording layer 4 and first substrate 5 to emit from the light entrance/exit surface A. The returning servo light passes through the objective lens 12 and is reflected by the dichroic mirror 13 by almost 100%, and then a servo information detector (not shown) detects servo information in the returning servo light. The detected servo information is used for the focus servo operation, tracking servo operation, slide servo operation, and the like. The holographic material constituting the recording layer 4 is designed so as not to be sensitive to red light. For this reason, even when the servo light has passed through the recording layer 4 or has been reflected diffusively by the reflective film 2, the recording layer 4 is not adversely affected. In addition, the returning servo light that has been reflected by the reflective film 2 is reflected by the dichroic mirror 13. Accordingly, the servo light is not detected by a CMOS sensor or CCD 14 used for the detection of reconstructed images, and thus does not interfere with the operation of a diffracted ray.

Note that with respect to the reflection range of $\lambda_0$ to $1.3\lambda_0$, $1.3\lambda_0$ shown in FIG. 7, $1.3\lambda_0$ equals to 692 nm when $\lambda_0$ is 532 nm, and thus servo light of wavelength 655 nm is undesirably reflected. This reflection range is set in view of light incident at an angle of ±40°. However, when such light that is incident at larger angles is intended to be used, a servo operation can be performed without causing any problems by using servo light incident at an angle of

within ±20° that has been masked. In addition, by securing larger helical pitch in the cholesteric liquid crystal layer in the filter layer used, it is also possible to readily cover servo light incident to the filter layer at an angle of within ±20°. In that case, it is only necessary to prepare a cholesteric liquid crystal layer with a reflection range of $\lambda_0$ to $1.1\lambda_0$. Thus, transmittance of the servo light entails no difficulty.

Both the information light and recording reference light generated in the recording/reproduction laser source pass through a polarizing plate 16 and are linearly polarized. The linearly polarized light then pass through a half mirror 17 and are circularly polarized after passing through a quarter wave plate 15. The circularly polarized light then pass through the dichroic mirror 13 and the objective lens 12, and are applied onto the optical recording media 21 in such a way that optical interference takes place between the information light and recording reference light to create interference patterns in the recording layer 4. The information light and recording reference light are incident from the light entrance/ exit surface A and interact with each other in the recording layer 4 to form an interference pattern there. Thereafter, the information light and recording reference light pass through the recording layer 4, launching into the filter layer 6. There, before reaching the bottom of the filter layer 6, the rays of the light are reflected and become returning light. More specifically, the information light and recording reference light do not reach the reflective film 2. This is because the filter layer 6 is formed of three cholesteric liquid crystal layers whose helical pitch is continuously changed in the thickness direction thereof and thus admits only red light. Moreover, if the intensity of light that has undesirably passed through the filter layer 6 is suppressed to 20% or less of that of the incident light, there will be no practical problems even when such light reaches the bottom of the filter layer 6 and is reflected back as returning light, because this returning light is again reflected by the filter layer and its intensity in a diffracted ray is as small as 4% (20% x 20%) or less of that of the diffracted ray.

<Specific example 2 of optical recording medium>

FIG. 6 is a schematic cross-sectional view showing the structure of the optical recording medium of specific example 2. This optical recording medium 22 according to specific example 2 is similar to that of specific example 1 except for the configuration of the filter layer 6.

In FIG. 6 the filter layer 6 admits only red light and reflects light of the other colors. Therefore, the information light, recording reference light and reproduction light do not pass through the filter layer 6 because they are light of green or blue, and never reach the reflective film 2, becoming returning light emitting from the light entrance/ exit surface A.

The filter layer 6 is a laminate of seven dielectric thin films with different indices of refractivity formed on a colored material-containing layer. The filter layer 6, where the dielectric thin films and a colored material-containing layer are combined, may be directly formed on the first gap layer 8 with a coating or deposition method, or may be formed by stamping a film, in which a colored material-containing layer and dielectric thin films are formed on a base material, into the optical disc shape. Using such a filter layer leads to optical transmittance of 50% or more for light of wavelength 655 nm and reflectivity of 30% or more for light of wavelength 532 nm, both incident at an angle of within ±40°, thereby eliminating the fluctuations in the selectively-reflecting wavelength range even when the incident angle has changed.

The optical recording medium 22 of specific example 2 may be a disc shape or card-like shape, and is formed in a similar manner as that of specific example 1.

Next, optical operations around the optical recording medium 22, which is constructed in the same way as in the optical recording medium 21, will be described with reference to FIG. 8. In the optical recording medium 22, as in the optical recording medium 21, first, a red light beam emitted from the servo laser source is reflected by a dichroic mirror 13 by almost 100%, and passes through an objective lens 12. By this, the servo light is applied onto the optical recording medium 22 in such a way that it focuses on the reflective film 2. More specifically, the dichroic mirror 13 is so configured that it admits only green or blue light but reflects almost 100% of red light. The servo light incident from the light entrance/exit surface A of the optical recording medium 22 passes through the first substrate 5, recording layer 4, second gap layer 7, filter layer 6 and first gap layer 8, is reflected by the reflective film 2, and passes again through the first gap layer 8, filter layer 6, second gap layer 7, recording layer 4 and first substrate 5 to emit from the light entrance/ exit surface A. The returning servo light passes through the objective lens 12 and is reflected by the dichroic mirror 13 by almost 100%, and then a servo information detector (not shown) detects servo information in the returning servo light. The detected servo information is used for the focus servo operation, tracking servo operation, slide servo operation, and the like. As in specific example 1, the holographic material constituting the recording layer 4 is designed so as not to be sensitive to red light. For this reason, even when the servo light has passed through the recording layer 4 or has been reflected diffusively by the reflective film 2, the recording layer 4 is not adversely affected. In addition, the returning servo light that has been reflected by the reflective film 2 is reflected by the dichroic mirror 13. Accordingly, the servo light is not detected by a CMOS sensor or CCD 14 used for the detection of reconstructed images, and thus does not interfere with the operation of a diffracted ray.

Both the information light and recording reference light generated in the recording/reproduction laser source pass through a polarizing plate 16 and are linearly polarized. The linearly polarized light then passes through a half

mirror 17 and are circularly polarized after passing through a quarter wave plate 15. The circularly polarized light then passes through the dichroic mirror 13 and the objective lens 12, and are applied onto the optical recording media 22 in such a way that optical interference takes place between the information light and recording reference light to create interference patterns in the recording layer 4. The information light and recording reference light are incident from the light entrance/exit surface A and interact with each other in the recording layer 4 to form an interference pattern there. Thereafter, the information light and recording reference light pass through the recording layer 4, launching into the filter layer 6. There, before reaching the bottom of the filter layer 6, the beams of the light are reflected and become returning light. More specifically, the information light and recording reference light do not reach the reflective film 2. This is because the filter layer 6 is a laminate in which a colored material-containing layer and dielectric thin films are combined, and thus admits only red light. Moreover, if the intensity of light that has undesirably passed through the filter layer 6 is suppressed to 20% or less of that of the incident light, there will be no practical problems even when such light reaches the bottom of the filter layer 6 and is reflected back as returning light, because this returning light is again reflected by the filter layer and its intensity in a diffracted ray is as small as 4% (20% x 20%) or less of that of the diffracted ray.

Examples

Hereinafter, Examples of the invention will be described, which however shall not be construed as limiting the invention thereto.

(Example 1)

<Preparation of optical recording medium>

The optical recording medium of Example 1 was prepared in the following way by disposing a first substrate, recording layer, second gap layer, filter layer, first gap layer, and second substrate in this order. The filter layer was formed in the following way by preparing a film-shaped filter and laminating it.

-Composition of photosensitive composition solution for recording layer-

- Di(urethaneacrylate) oligomer (ALU-351, produced by Echo Resins Corp.) ... 59 Parts by mass
- Isobornylacrylate ... 30 Parts by mass
- Vinylbenzoate ...10 Parts by mass
- Polymerization initiator (IRGA CURE 784, produced by Ciba Specialty Chemicals) ...1 Part by mass

-Preparation of filter-

Initially, polyvinyl alcohol (bland name: MP 203, produced by Kuraray Co., Ltd.) was applied on a polycarbonate film of 100 μm thickness (bland name: Iupilon, produced by Mitsubishi Gas Chemical Company Inc.) to the thickness of 1 μm to prepare a base film. The surface of the polyvinyl alcohol film was rubbed by passing this base film through a rubbing device, by which capability to align liquid crystal molecules can be provided.
Next, coating solutions A, B, and C for cholesteric liquid crystal layer having the components shown in Table 1 below were prepared by a conventional method.

Table 1

| Component (parts by mass) | Coating solution for cholesteric liquid crystal layer | | |
|---|---|---|---|
| | A | B | C |
| UV polymerizable liquid crystal compound | 93.16 | 94.02 | 94.74 |
| Chiral compound | 6.84 | 5.98 | 5.26 |
| Photoinitiator | 0.10 | 0.10 | 0.10 |
| Sensitizer | 0.02 | 0.02 | 0.02 |

(continued)

| Component (parts by mass) | Coating solution for cholesteric liquid crystal layer | | |
|---|---|---|---|
| | A | B | C |
| Solvent | 400 | 400 | 400 |

* UV polymerizable liquid crystal compound: PALIOCOLOR LC242 (bland name, produced by BASF Corp.)
* Chiral compound: PALIOCOLOR LC756 (bland name, produced by BASF Corp.)
* Photoinitiator: IRGACURE 369 (bland name, produced by Ciba Specialty Chemicals)
* Sensitizer: diethylthioxanthone
* Solvent: methyl ethyl ketone (MEK)

Next, the coating solution A for cholesteric liquid crystal layer was applied on the base film with a bar coater, dried, and then aligned and ripened at 110°C for 20 seconds. Thereafter, the resulting liquid crystal was exposed to light under 110°C with an ultrahigh-pressure mercury vapor lamp at an irradiation energy of 500 mJ/cm$^2$ to form a 2 μm thick cured film as a cholesteric liquid crystal layer A.

Next, the coating solution B for cholesteric liquid crystal layer was applied on the cholesteric liquid crystal layer A with a bar coater, dried, and then aligned and ripened at 110°C for 20 seconds. Thereafter, the resulting liquid crystal was exposed to light under 110°C with an ultrahigh-pressure mercury vapor lamp at an irradiation energy of 500 mJ/cm$^2$ to form a 2 μm thick cured film as a cholesteric liquid crystal layer B.

Next, the coating solution C for cholesteric liquid crystal layer was applied on the cholesteric liquid crystal layer B with a bar coater, dried, and then aligned and ripened at 110°C for 20 seconds. Thereafter, the resulting liquid crystal was exposed to light under 110°C with an ultrahigh-pressure mercury vapor lamp at an irradiation energy of 500 mJ/cm$^2$ to form a 2 μm thick cured film as a cholesteric liquid crystal layer C.

In this way, a three-layered filter for optical recording medium of Example 1 was prepared that has circularly polarizing characteristic, wherein each cholesteric liquid crystal layer has a different λ value and the helices rotate in the same, right-handed direction.

Next, the resultant filter for optical recording medium was stamped into a disc shape of predetermined size, so that the filter could be arranged on the substrate.

-First substrate-

For the first substrate, a polycarbonate resin substrate of 120 mm in diameter and 0.6 mm in thickness was used that is generally used for DVD+RW. The surface of the substrate used was smooth and concavo-convex pattern such as a servo pit pattern was not formed thereon.

-Second substrate-

For the second substrate, a polycarbonate resin substrate of 120 mm in diameter and 0.6 mm in thickness was used that is generally used for DVD+RW. A servo pit pattern was formed all over the surface of the substrate, with the track pitch being 0.74 μm, the groove depth 175 nm, and groove width 300 nm.

At first, a reflective film made of aluminum (Al) was deposited on the surface of the servo pit pattern of the second substrate to the thickness of 200 nm with a DC magnetron sputtering method.

-First gap layer-

--Preparation of coating solution for first gap layer--

SD-640 (produced by Dainippon Ink and Chemicals Inc.) was used, dissolved, and dispersed to prepare a coating solution for first gap layer.

The resulting coating solution for first gap layer was applied on the surface of the reflective film of the second substrate, on which an Al reflective film was formed, by spin coating using a spin coater (model name:1H-B7, produced by Mikasa Co., Ltd.) operated at 1,500 rpm for 15 seconds, and was cured by UV irradiation with 1,500 mJ/cm$^2$ at a temperature of 23°C. This operation was repeated three times and the total film thickness was 75 μm. After curing, the first gap layer had a deflection temperature under load according to JIS K7207 of 135°C (70°C or more) under the condition of 4.6 kgf/cm$^2$.

-Second gap layer-

A 100 μm thick polycarbonate film was used as the second gap layer.

-Formation of laminate-

As shown in FIG. 4, the filter was laminated over the second substrate spin-coated with a first gap layer 8 after applying a UV adhesive (SD-640, produced by Dainippon Ink and Chemicals Inc.) while avoiding entry of air bubbles, and thereby a filter layer 6 was formed. Then, a second gap layer 7 was bonded on the filter layer 6 with a laminating apparatus (model name: HAL 110aa, produced by Sankyo Co., Ltd.) under the conditions of a pressure-roller temperature of 23°C, pressure-roller pressure of 0.1 MPa and bonding speed of 1.0 m/min. Further, the prepared coating solution of photosensitive composition for recording layer was poured over the surface of the second gap layer 7 inside a spacer as a bank, and cured at 80°C for 40 minutes to thereby form a 500 μm thick recording layer 4. A first substrate 5 was arranged on the recording layer 4, and outsides of the first substrate and the second substrate were pressurized at a pressure of 0.08 MPa at 80°C for 40 minutes to form a laminate. In this way, the optical recording medium 21 shown in FIGS. 2 and 4 was prepared.

-Recording and evaluation of optical recording medium-

A series of multiplexing hologram was written into the resulting optical recording medium using collinear hologram recording and reproducing tester SHOT-1000 produced by Pulstec Industrial Co., Ltd., wherein the size of recording spot at a focus position of recorded hologram was 200 μm in diameter, and sensitivity (recording energy) and multiplexing number were measured and evaluated. Results are shown in Table 2.

-Measurement of sensitivity-

Variation of error probability of reproduction signal (BER: Bit Error Rate) was measured by changing the power of the irradiating light ($mJ/cm^2$) during recording). Normally, with the increase of recording-light power, the luminance of reproduction signal increases, and with the increase of the luminance of reproduction signal, the BER of reproduction signal tends to reduce gradually. Minimum recording-light power at which almost satisfactory reconstructed images (BER $< 10^{-3}$) are obtained was defined as the recording sensitivity of recording material. As a result, BER $< 10^{-3}$ was obtained with a recording-light power of 150 $mJ/cm^2$ (Recording sensitivity: 75 $mJ/cm^2$). Results are shown in Table 2.

-Evaluation of multiplexing number-

The multiplicity of optical recording medium was evaluated using a technique in which recording spots are shifted spirally to perform evaluation, described in ISOM'04, Th-J-06, pp. 184-185, Oct. 2004. Here, the number of holograms recorded, and recording pitch was 13x13=169 holograms and 28.5 μm, respectively. The multiplicity at the last 169th hologram recording is 49. With the increase of the number of holograms recorded, the multiplicity increases. Thus, if the multiplexing characteristics of recording material are insufficient, BER increases with the increase of the number of recording. The number of holograms recorded when BER exceeds $10^{-3}$ (BER $> 10^{-3}$) was defined as multiplexing characteristics M of material. Using this technique, it was confirmed that as the multiplexing characteristics M, characteristics corresponding to 120 multiplexing could be obtained.

-Evaluation of affections on the filter layer or the like-

Affections on the filter layer or the like were evaluated by observing the layer states of the filter layer and recording layer to be disposed on the first gap layer. Evaluation was performed on a three grade scale based on the following standards. Results are shown in Table 2.

Excellent: no affection on the layer to be disposed on the first gap layer such as a filter layer and layer state is extremely satisfactory.

Poor: first gap layer is softened somewhat and wrinkles are generated partially in the layer such as a filter layer.

Bad: first gap layer is softened and cracks are generated in the layer such as a filter layer.

(Example 2)

The optical recording medium of Example 2 was prepared in the same way as in Example 1, except that in Example 1, the first gap layer was prepared by the method for bonding a sheet member by use of a non-thermosoftening

adhesive instead of a spin coating method. Recording sensitivity, multiplexing characteristics, and affections on the filter layer or the like were evaluated. Results are shown in Table 2.

-Method for bonding sheet member by means of non-thermosoftening adhesive-

A polycarbonate (PC) film of 80 μm thickness as the material for the sheet member was bonded using SD-640 (produced by Dainippon Ink and Chemicals Inc.) as the non-thermosoftening adhesive under the circumstances of a temperature of 23°C and a humidity of 50% as the adhesive condition by pressure bonding by use of a laminator (model name: HAL110aa, produced by Sankyo Co., Ltd.). The pressure bonding was performed under the conditions of a pressure-roller temperature of 23°C, pressure-roller pressure of 0.1 MPa and bonding speed of 1.0 m/min. Thereafter, adhesive SD-640 was cured and bonded by performing UV irradiation of 1,500 mJ with a UV irradiation apparatus. After curing, the adhesive had a deflection temperature under load according to JIS K7207 of 135°C (70°C or more) under the condition of 4.6 kgf/$cm^2$.

(Example 3)

The optical recording medium of Example 3 was prepared in the same way as in Example 1, except that in Example 1, the first gap layer was prepared by vapor deposition instead of a spin coating method. Recording sensitivity, multiplexing characteristics, and affections on the filter layer or the like were evaluated. Results are shown in Table 2.

-Vapor deposition-

The vapor deposition was performed by vacuum vapor deposition. In the vacuum vapor deposition, $SiO_2$ as an evaporation source and a second substrate were placed in a vacuum vessel and a film was formed under a pressure of 0.5 Pa on the entire surface of the reflective film on the side where the servo pit pattern of the second substrate was formed. A 100 μm thick film made of $SiO_2$ material, with a satisfactory crystalline quality was obtained.

The deflection temperature under load of the film was measured by the method according to JIS K7207. Specifically, a test piece was prepared by using a film material with a size of 127 mmx12.7 mm, thickness of 0.1 mm having a sufficiently low deflection temperature under load, and forming a film made of $SiO_2$ thereon by vapor deposition. The test piece had a deflection temperature under load according to JIS K7207 of 135°C (70°C or more) under the condition of 4.6 kgf/$cm^2$.

(Example 4)

The optical recording medium of Example 4 was prepared in the same way as in Example 1, except that in Example 1, the first gap layer was prepared by sputtering instead of a spin coating method. Recording sensitivity, multiplexing characteristics, and affections on the filter layer or the like were evaluated. Results are shown in Table 2.

-Sputtering-

The sputtering was performed as follows. An Ar gas was introduced into a vacuum of 0.5 Pa, an alternating current high voltage was applied between the second substrate and a target (substance to be deposited: $SiO_2$), the Ar gas ionized by glow discharge was allowed to collide with the target as a cathode, and sputtered target substance was deposited on the surface of the second substrate as an anode to form a film.

The sputtering region was the entire surface of the reflective film on the side where the servo pit pattern of the second substrate was formed, and a film was formed thereon. A 100 μm thick film made of $SiO_2$ material, with a satisfactory crystalline quality was obtained.

The deflection temperature under load of the film was measured by the method according to JIS K7207. Specifically, a test piece was prepared by depositing a film of $SiO_2$ on a film material with a size of 127 mmx12.7 mm, thickness of 0.1 mm having a sufficiently low deflection temperature under load by sputtering. The test piece had a deflection temperature under load according to JIS K7207 of 135°C (70°C or more) under the condition of 4.6 kgf/$cm^2$.

(Comparative Example 1)

The optical recording medium of Comparative Example 1 was prepared in the same way as in Example 1, except that in Example 2, the first gap layer was formed by bonding a PC film with the adhesive material layer shown below. Recording sensitivity, multiplexing characteristics, and affections on the filter layer or the like were evaluated. Results are shown in Table 2. After the curing, the first gap layer of Comparative Example 1 had a deflection temperature

under load according to JIS K7207 of 65°C (less than 70°C) under the condition of 4.6 kgf/$cm^2$.

-Preparation of first gap layer-

Optical adhesive material PD-S1 (produced by PANAC Co., Ltd.) was used as an adhesive material layer to which the PC sheet for first gap layer is bonded.

The adhesive material for bonding PC sheet was bonded to the surface of the reflective film of the second substrate, on which Al reflective film was formed, with a laminator (model name: HAL110aa, produced by Sankyo Co., Ltd.) under the conditions of a pressure-roller temperature of 23°C, pressure-roller pressure of 0.1 MPa and bonding speed of 1.0 m/min. Then, a separator for peeling was peeled off, a 80 μm thick PC sheet was bonded to the surface of adhesive material with a laminator (model name: HAL110aa, produced by Sankyo Co., Ltd.) under the conditions of a pressure-roller temperature of 23°C, pressure-roller pressure of 0.1 MPa and bonding speed of 1.0 m/min.

Table 2

| | Forming method of first gap layer | Deflection temperature under load (°C) under the condition of 4.6 kgf/$cm^2$ according to JIS K7207 | Thickness of first gap layer (μm) | Affections on filter layer filter layer and recording layer | Recording sensitivity (mJ/$cm^2$) | Multiplexing characteristics M |
|---|---|---|---|---|---|---|
| Example 1 | Spin coating | 135 (>70) | 100 | Excellent | 70-80 | 120 |
| Example 2 | Sheet bonding | 135 (>70) | 100 | Excellent | 70-80 | 120 |
| Example 3 | Vapor deposition | 135 (>70) | 100 | Excellent | 70-80 | 120 |
| Example 4 | Sputtering | 135 (>70) | 100 | Excellent | 70-80 | 120 |
| Comp. Example 1 | Sheet bonding with adhesive material | 65 (<70) | 100 | Poor | 70-80 | 120 |

The results of Table 2 indicate that according to the invention, there are no affects on the other layer such as a filter layer, the first gap layer is not softened under the heating during which a filter layer is laminated on the first gap layer, and wrinkles or cracks are not generated in the filter layer in Examples 1 to 4 in contrast to Comparative Example 1. In Comparative Example 1, the first gap layer is softened under the heating during which the filter layer is laminated on the first gap layer, wrinkles are generated in the filter layer, indicating that in Examples 1 to 4 remarkable improvement has been achieved.

The invention can solve conventional problems and can provide an optical recording medium in which even if a filter layer or the like is laminated on a first gap layer, the first gap layer is not softened, and harmful effect such as a wrinkle and crack is not caused in the laminated filter layer or the like, wherein the uniformity of the thickness of first gap layer is stable; and a method for producing an optical recording medium that can produce such optical recording medium efficiently.

The optical recording medium of the invention is an optical recording medium in which even if a filter layer or the like is laminated on a first gap layer, the first gap layer is not softened, and harmful effect such as a wrinkle and crack is not caused in the laminated filter layer or the like, wherein the uniformity of the thickness of first gap layer is stable, and is widely used, for example, for relatively thin, flat holograms for recording two-dimensional information, for volume holograms for recording much three-dimensional information such as stereoimages, and for reflective holograms.

The method for producing an optical recording medium of the invention produces an optical recording medium in which even if a filter layer or the like is laminated on a first gap layer, the first gap layer is not softened, and harmful effect such as a wrinkle and crack is not caused in the laminated filter layer or the like, wherein the uniformity of the thickness of first gap layer is stable; and such optical recording medium is widely used, for example, for relatively thin,

flat holograms for recording two-dimensional information, for volume holograms for recording much three-dimensional information such as stereoimages, and for reflective holograms.

## Claims

1. An optical recording medium comprising:

   a recording layer;
   a first substrate;
   a second substrate;
   a first gap layer;
   a second gap layer; and
   a filter layer,
   wherein the recording layer records information by holography and the first gap layer comprises a non-thermosoftening material having a deflection temperature under load of at least 70°C or more.

2. The optical recording medium according to claim 1, wherein the non-thermosoftening material comprises a resin.

3. The optical recording medium according to one of claims 1 and 2, which is used for an optical recording method where information light and reference light are applied onto the optical recording medium in such a way that the optical axis of the information light is collinear with that of the reference light.

4. A method for producing the optical recording medium of any one of claims 1 to 3, comprising:

   forming a recording layer; and
   forming a first gap layer.

5. The method for producing an optical recording medium according to claim 4, wherein the forming a first gap layer forms the first gap layer by applying the non-thermosoftening material by spin coating.

6. The method for producing an optical recording medium according to claim 4, wherein the forming a first gap layer forms the first gap layer by bonding a sheet member with a non-thermosoftening adhesive.

7. The method for producing an optical recording medium according to claim 4, wherein the forming a first gap layer forms the first gap layer by depositing an inorganic material by at least one of vapor deposition and sputtering.

# FIG. 1

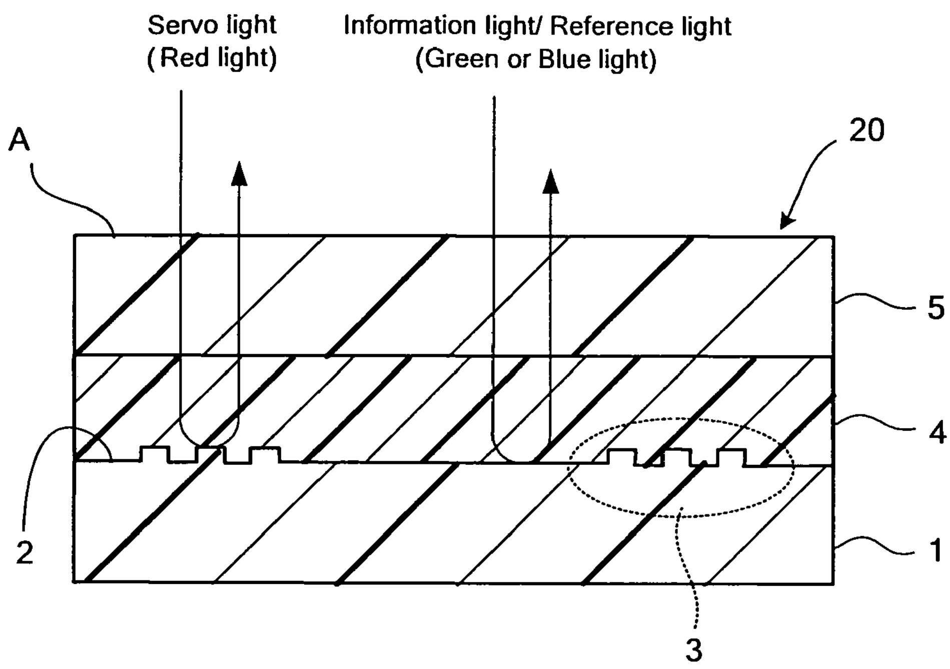
Servo light
(Red light)
Information light/ Reference light
(Green or Blue light)
A
20
5
4
2
1
3

FIG. 2

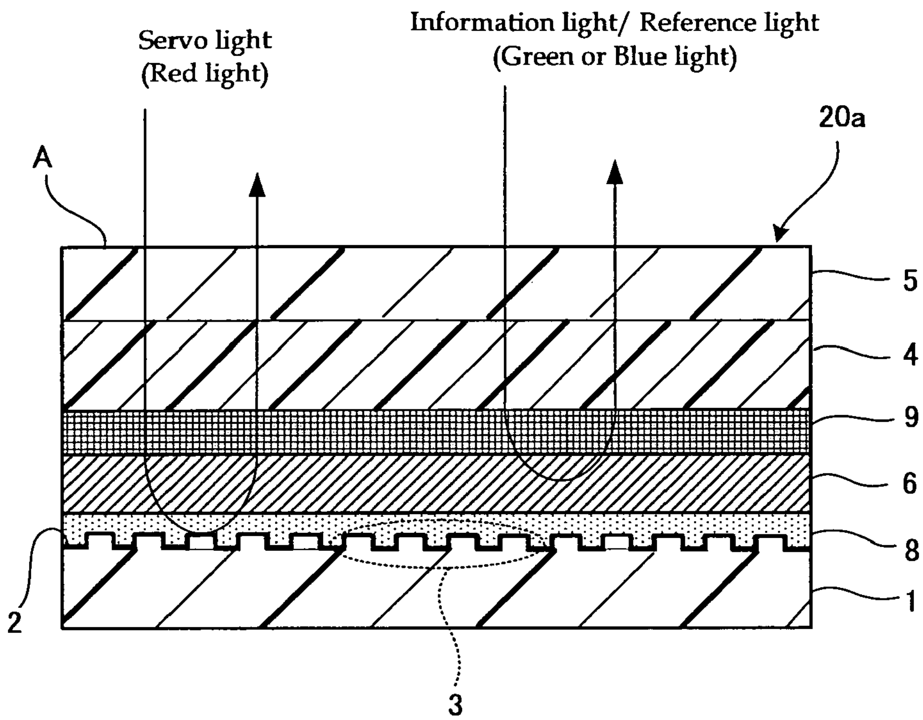
Servo light
(Red light)
Information light/ Reference light
(Green or Blue light)
20a
A
5
4
9
6
8
1
2
3

FIG. 3

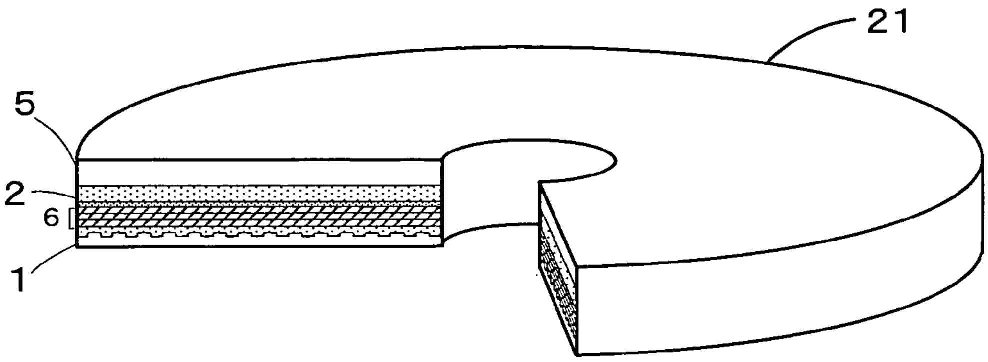


FIG. 4

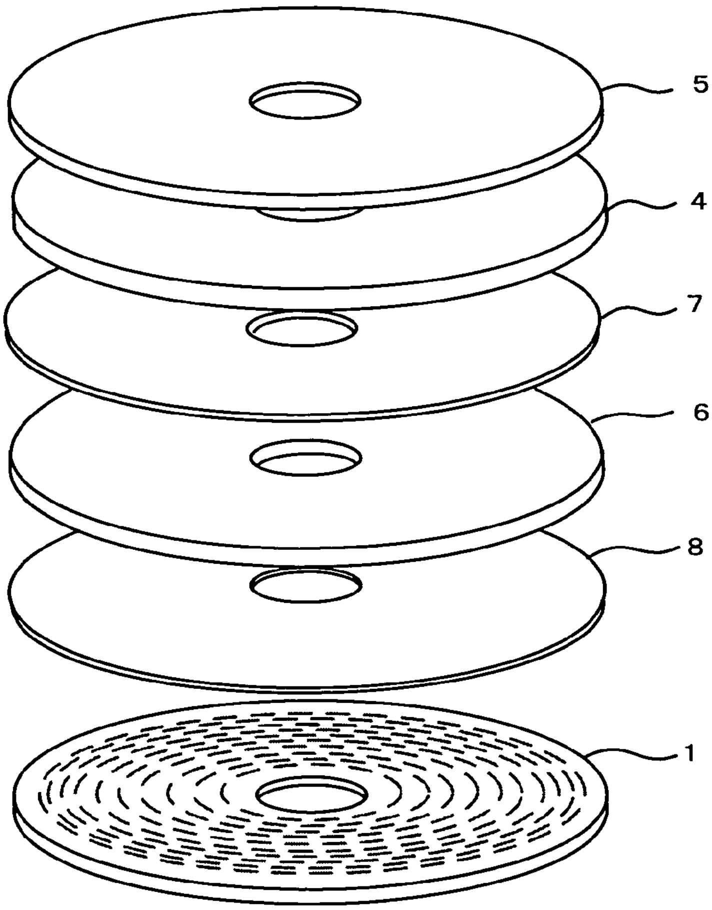

# FIG. 5

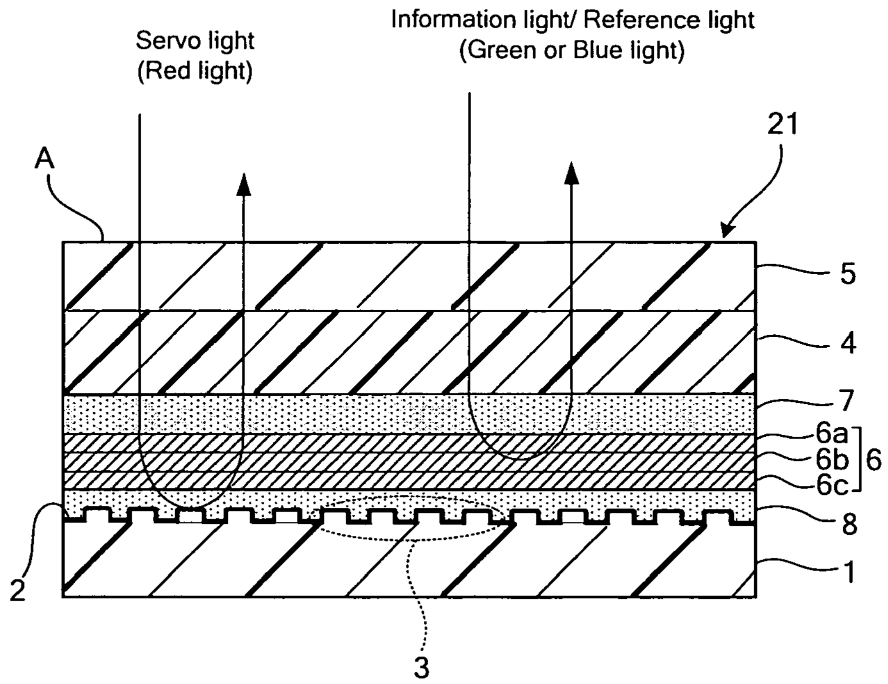
Servo light
(Red light)
Information light/ Reference light
(Green or Blue light)
21
A
5
4
7
6a
6b
6
6c
8
2
1
3

# FIG. 6

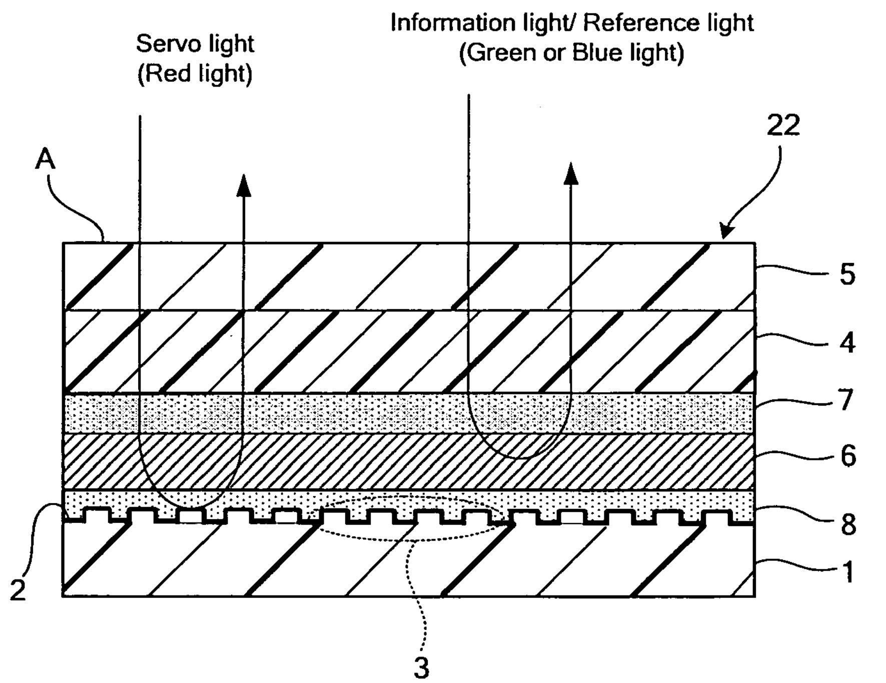
Servo light
(Red light)
Information light/ Reference light
(Green or Blue light)
22
A
5
4
7
6
8
2
1
3

FIG. 7

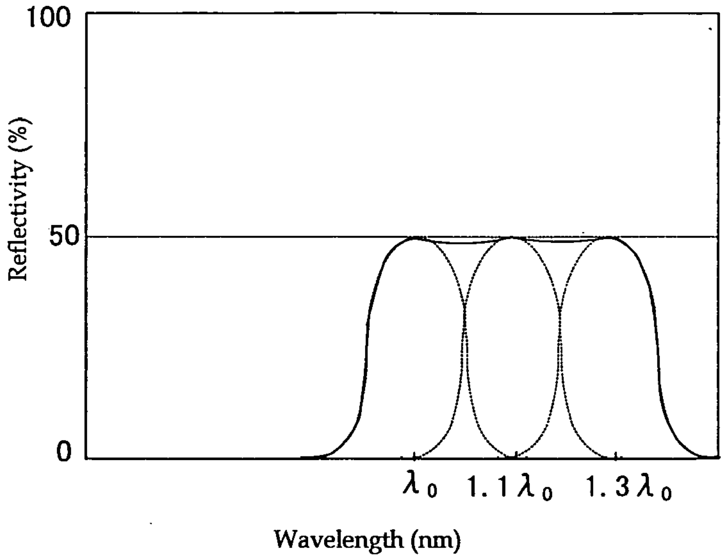

FIG. 8

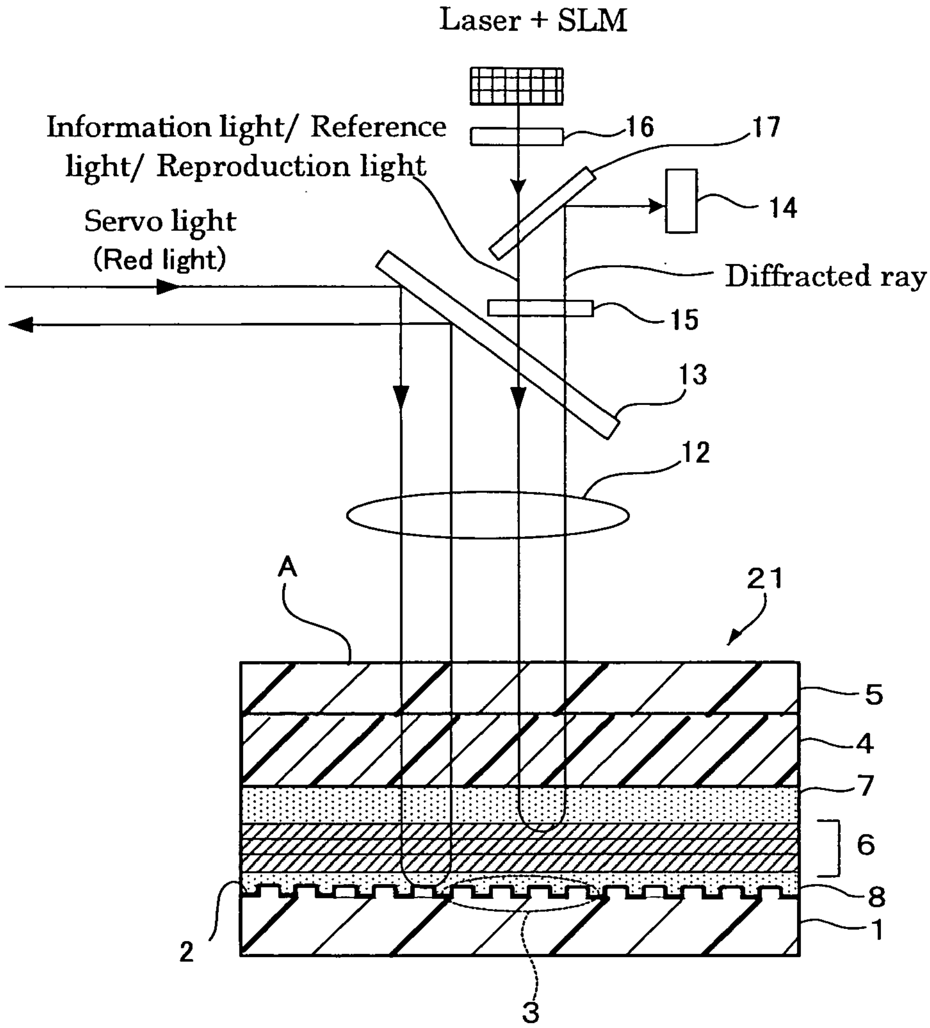
Laser + SLM
Information light/ Reference light/ Reproduction light
16
17
14
Servo light
(Red light)
Diffracted ray
15
13
12
A
21
5
4
7
6
8
1
2
3

# FIG. 9

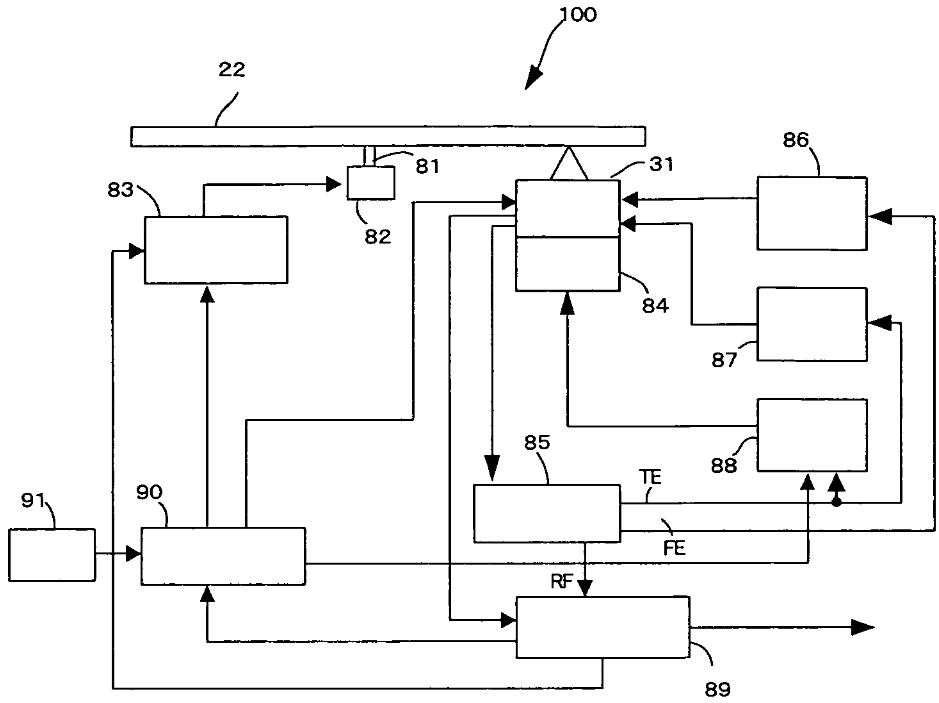

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002123949 A
- JP 11311936 A
- JP 2004265472 A
- US 5759721 A
- US 4942112 A
- US 4959284 A
- US 6221536 B
- US 6743552 B
- WO 9744714 A
- WO 9713183 A
- WO 9926112 A
- JP 2880342 B
- JP 2873126 B
- JP 2849021 B
- JP 3057082 B
- JP 3161230 B
- JP 2001316416 A
- JP 2000275859 A
- JP 58015603 A
- JP 58040302 A
- JP 59028328 B
- JP 60053300 B
- JP 61009621 B
- JP 62003842 B
- JP 59089303 A
- JP 60060104 A
- JP 2005084780 A
- JP 2004352081 A
- JP 47010537 A
- JP 58111942 A
- JP 58212844 A
- JP 59019945 A
- JP 59046646 A
- JP 59109055 A
- JP 63053544 A
- JP 3610466 B
- JP 4226187 B
- JP 48030492 B
- JP 48031255 B
- JP 48041572 B
- JP 48054965 B
- JP 50010726 B
- US 2719086 A
- US 3707375 A
- US 3754919 A
- US 4220711 A


### Non-patent literature cited in the description


- Photopolymer Handbook. Kogyo Chosakai Publishing Inc, 1989
- Photopolymer Technology. The Nikkan Kogyo Shimbun Ltd, 1989
- *SPIE Journals and Proceedings,* 1997, vol. 3010, 354-372
- *SPIE Journals and Proceedings,* 1998, vol. 3291, 89-103
- *Research Disclosure,* December 1980, vol. 200
- Zoukanzai. Kodansha Ltd, 1987, 160-163
- Kinousei Shikiso no Kagaku. CMC Press, 1981, 393-416
- Shikizai. 1987, vol. 60, 212-224
- *ISOM'04,* October 2004, 184-185